# EUROPEAN PATENT APPLICATION

(11) **EP 4 799 516 A1**
(43) Date of publication of application: **02.09.2026**
(21) Application number: 26161044.8
(22) Date of filing: 26.02.2026
(51) Int. Cl.: A43B 23/02, B33Y 80/00

(54) **METHOD AND SYSTEM FOR MANUFACTURING A TEXTILE ELEMENT**

(30) Priority: 28.02.2025 CH 1872025; 28.02.2025 CH 1862025; 28.02.2025 CH 1922025; 31.07.2025 EP 25193010
(71) Applicant: On Clouds GmbH, 8005 Zürich (CH)
(72) Inventor: VOELCHERT, Johannes, 8005 Zürich (CH); KELLER, Lukas, 8005 Zürich (CH); HULLEGIE, Eric, 8005 Zürich (CH)
(74) Representative: Eichelhardt, Frank Robert

(57) **Abstract**

The invention relates to a method for manufacturing a textile element (10), in particular a textile footwear upper (12), comprising: a step of applying at least one thermoplastic filament (18) onto a shaping carrier (20), in particular a footwear last (22), to form a plurality of path segments (24), in particular loops (26), on the shaping carrier (20) along an application path (28), thereby forming a textile structure (111), wherein at least a predefined section of the textile structure (111) is formed as a geometric functional structure (113) that is water repellent and water vapor breathable. In addition, the invention relates to an article of footwear (78) and a manufacturing system (82) for manufacturing a textile element (10).

## Description

### Technical Field

The present invention relates to a method for manufacturing textile elements, in particular textile footwear uppers, and to articles of footwear, in particular sports and/or leisure shoes, having such textile elements forming textile footwear uppers. Furthermore, the present invention pertains to a manufacturing system being configured to execute such a method.

### Background

Apparel manufacturing, including footwear, has continuously evolved to meet the demands of performance, comfort, and sustainability. The need for high-quality garments and shoes that offer durability, flexibility, breathability, and lightweight construction has driven innovation in production techniques. Traditional methods of manufacturing apparel and footwear involve knitting, weaving, or using cut-and-sew techniques, which can result in material waste and require extensive labor. Recent innovations have sought to improve efficiency, reduce waste, and enhance the performance characteristics of these products.

Emerging techniques enable the direct application of material onto a substrate, allowing for controlled deposition of functional layers. This approach facilitates the creation of lightweight, seamless, and high-performance apparel and footwear components with improved breathability and durability while minimizing material waste.

WO 2022/069583 A1 discloses a method for producing a textile material, in particular a shoe upper, by applying a molten thermoplastic filament onto a shoe last to form the textile material with a plurality of superimposed loops. Herein, the thermoplastic filament is ejected from a spray head in a molten state as a helical strand and applied to the shoe last.

Existing methods for constructing apparel and footwear often involve multiple steps and separate material components, which can lead to inefficiencies in production and variability in product performance. Advanced material application techniques address these challenges by streamlining the manufacturing process and offering greater design flexibility.

Despite these advancements, there remains a need for further refinement and optimization of these techniques. This involves improving the performance of the products while also increasing flexibility in production processes and product properties, allowing for more precise control over characteristics such as durability and usability.

This includes the ability to customize material composition, texture, breathability, elasticity, and structural support while also ensuring scalable and cost-effective production methods that meet the evolving demands of the industry, all while minimizing environmental impact and promoting sustainable practices throughout the production cycle.

### Summary

The invention relates to a method for manufacturing a textile element, in particular a textile footwear upper, the method comprising the step of applying at least one thermoplastic filament onto a shaping carrier, in particular a footwear last, to form a plurality of, preferably partially superimposed, path segments, in particular loops, on the shaping carrier along an application path, thereby forming a textile structure. According to the invention, at least a predefined section of the textile structure is formed as a geometric functional structure that is water repellent and water vapor breathable.

The invention also concerns an article of footwear, in particular a sports and/or leisure shoe, comprising a textile element forming a textile footwear upper and being manufactured by the method as disclosed herein, and a sole unit which is connected to the textile footwear upper.

In addition, the invention pertains to a manufacturing system for manufacturing a textile element, in particular a textile footwear upper, the manufacturing system being configured to execute the method as disclosed herein.

Through this, a method and system for manufacturing a textile element, in particular a textile footwear upper, and for manufacturing an article of footwear can be refined and/or optimized. The performance of the final products can be improved while increasing flexibility during production and with respect to product properties. Precise control over product characteristics such as flexibility, cushioning, durability, and/or usability can be achieved. A wide range of customizations can be made possible, in particular regarding material density, texture, elasticity, breathability, and structural support. Yet still, scalable, cost-effective, streamlined, and/or fully automated production methods can be enabled. In particular, a method for manufacturing a textile element and a textile element manufactured by such method is provided, the textile element being worn and/or carried by and/or on a person for an activity such as a sport activity, the textile element providing a protection (layer) against a wet environment, such as an environment with rain or drizzle, while at the same time providing water vapor breathability to be able to remove perspiration. This especially allows for a functional separation to be achieved by the geometric functional structure of the textile element between an external environment that is turned away from the person and an internal environment that is turned towards the person.

One Idea of the invention is that the step of applying at least one thermoplastic filament is performed such that the geometric functional structure, preferably the whole textile structure of the textile element, is adapted to be repellent to water droplets while simultaneously being adapted to allow for transmission, diffusion and/or penetration of water vapor. In other words, one idea is that the formed geometric functional structure is adapted to be permeable for water vapor molecules but is restricting and/or blocking water droplets from passing through. The specific geometric design of the geometric functional structure may provide the functionality or specific property of a semipermeable membrane. The term "the at least one" may refer to a single entity or to a plurality or all of the entities. Thus, "the at least one thermoplastic filament" may refer to the one single thermoplastic filament or to a plurality or all of the thermoplastic filaments.

The predefined section of the textile structure that is formed as the geometric functional structure may be, for example, an area of the textile structure that shall be water repellent. In particular, the complete textile structure may be formed as the geometric functional structure to be water repellent and water vapor breathable. In case the textile element is a textile footwear upper, the whole textile footwear upper may be formed as the geometric functional structure to be water repellent and water vapor breathable.

The geometric functional structure may comprise openings that have geometric dimensions for being repellent to water and allowing for transmission of water vapor. The geometric functional structure with the openings may serve as a separation between two environments that allows water vapor molecules to pass through the openings but hinders water droplets from passing through. The dimensions and/or sizes of the openings determine a degree of transmission and of blocking.

The geometric functional structure may be formed as a two-dimensional (2D) or three dimensional (3D) mesh geometric structure. The at least one thermoplastic filament may form a plurality of crossings and/or nodes along the application path. The at least one thermoplastic filament respectively the path segments and/or the crossings may form the mesh geometric structure.

The mesh geometric structure may be two dimensional, similar to a fishing net or a layer of cross-linked and/or meshed polymers of a plastic, such as a thermosetting polymer. The method may form such two-dimensional mesh geometric structure that is capable of repelling water droplets but to allow vapor breathing. This two-dimensional mesh geometric structure may be provided as a thermoplastic filament layer. Such thermoplastic filament layer may be provided together with other layers. Herein, the two-dimensional mesh geometric structure may provide for the specific property of water repellence and vapor breathability whereas the other layers may be adapted in view of other specific properties such as cushioning, higher flexibility, and/or an aesthetic effect. The mesh geometric structure may be three dimensional, similar to at least two layers of fishing nets or meshed polymers. In particular the three-dimensional mesh geometric structure may include connections that connects the at least two layers with each other in a material-bonded, in particular fused, manner. In particular the three-dimensional mesh geometric structure may be formed as a branched structure, similar to meshed polymers of a plastic, such as a thermosetting polymer. Thus, a plurality of openings may connect one side of the geometric functional structure with the other side. The geometric functional structure may be a three dimensional (3D) porous geometric structure.

The geometric functional structure may comprise pores with typical sizes of at least 1 µm and/or of at most 1000 µm. In particular the geometric functional structure, in particular the three-dimensional porous geometric structure, may be macroporous having a typical pore diameter or pore size of at least 5 µm. The macropores respectively the openings or the cavities of this size may host a rapid flow of water vapor while hindering water droplets to pass through. In particular, surface tension and/or capillary forces may withhold the water from passing through the openings of the porous geometric structure.

A virtual circle or a virtual sphere exactly fitting into the biggest opening of 90 % of the openings, preferably, all of the openings of the geometric functional structure, may have a diameter of at most 1000 µm, preferably of at most 100 µm, most preferably at most 20 µm. With such dimensions of the openings, blocking of water droplets through the openings can be established. The water droplets can be adhered between two opposing sides of the opening due to surface tension.

A longest distance between two neighboring and/or adjacent path segments may be at most 1000 µm, preferably at most 100 µm, most preferably at most 20 µm. In case a water droplet enters an opening between the two neighboring path segments, the water droplet can adhere to the two path segments thereby blocking the movement of the water droplet through the opening between the two neighboring path segments. In case the two neighboring path segments are parallel thermoplastic filaments facing each other, the two parallel thermoplastic filaments may form a slit which prevents the water droplet from passing through.

A virtual circle or a virtual sphere exactly fitting into the smallest opening among 90% of the openings, in particular of all of the openings of the geometric functional structure, has a diameter of at least 10 µm. This dimension of the diameter provides for good and sufficient water vapor breathability. In addition, the dimension of at least 10 µm hinders a capillary action of water droplets or liquid water.

An average diameter of virtual circles or virtual spheres exactly fitting in all the openings of the geometric functional structure may be at least 10 µm and/or at most 1000 µm, preferably at most 100 µm, most preferably at most 20 µm. The average diameter is the average value of the diameters of all the virtual circles or virtual spheres fitting exactly into openings of the geometric functional structure. The average diameter may be a value similar to a typical pore diameter of geometric functional structure in case of a porous geometric structure.

A median diameter of virtual circles or virtual spheres exactly fitting in all the openings of the geometric functional structure may be at least 10 µm and/or at most 1000 µm, preferably at most 100 µm, most preferably at most 20 µm. The median diameter is the median value of the diameters of all the virtual circles or the virtual spheres fitting exactly into openings of the geometric functional structure. The median value of the diameter is the diameter separating the higher half of the diameters from the lower half of the diameters.

The at least one thermoplastic filament may be applied as to form a first thermoplastic layer. The method may further comprise a step of applying a second thermoplastic filament onto the first thermoplastic layer to form a plurality of second path segments, in particular second loops, on the first thermoplastic layer along a second application path, thereby forming a second thermoplastic layer on top of the first thermoplastic layer. Thereby, a layer composition with at least the first thermoplastic layer and the second thermoplastic layer can be provided. The layer composition of at least the first and second thermoplastic layer can further improve water repellency, in particular by providing a branching of openings of the first thermoplastic layer and the second thermoplastic layer. The first thermoplastic layer and the second thermoplastic layer may provide a densification of the geometric functional structure, thus increasing a resistance against a pass through of water droplets. Openings of the at least first and second thermoplastic layers may be provided also in a direction parallel to the thermoplastic layers. A winding path through openings may be created.

The second thermoplastic layer may be fixed to the first thermoplastic layer in at least one specific area. The second thermoplastic layer may be thermally bonded to the thermoplastic layer, preferably by applying the second thermoplastic filament onto the underlying thermoplastic filament by depositing the former in an at least partially molten and/or liquid state onto the latter, most preferably by discharging the second thermoplastic filament from a filament discharge nozzle of a spray head of the manufacturing system. The at least first and second thermoplastic layer fixed together form a geometric functional structure that may specifically engineered and designed with the help of the at least two thermoplastic layers.

The plurality of path segments of the at least one thermoplastic layer and the plurality of second path segments of the second thermoplastic layer may be applied having the same application path, in particular parallel to each other, but with an offset relative to each other in order to create similar patterns of path segments but with a shift between the plurality of path segments of the first thermoplastic layer and the plurality of second path segments of the second thermoplastic layer. The offset may be a predefined distance of the second application path relative to the first application path in a direction perpendicular to a longitudinal axis of the application path. One can say that a lateral relative offset may be provided between the two application path. Alternatively or additionally, for example in case the path segments are loops and the second path segments are loops as well, the offset may be a predefined distance in a direction of the longitudinal axis of the application path. Thereby, the loops are not applied exactly over each other, so as to say are not congruent in a direction of a normal of the first and/or second thermoplastic layer (a surface), but are laid over one another with an offset, similar to brickwork.

The method may further comprise a step of applying a third thermoplastic filament onto the second thermoplastic layer to form a plurality of third path segments, in particular third loops, on the second thermoplastic layer along a third application path, thereby forming a third thermoplastic layer on top of the second thermoplastic layer. The third application path may be the same as the first application path in order to have similar patterns above each other. One can say that the first and third thermoplastic layer may form superimposed overlying structures or one can say that the plurality of path segments of the first thermoplastic layer and the third path segments of the third thermoplastic layer may be congruent to and arranged above each other in a direction of a normal of the first and/or second thermoplastic layer.

The geometric functional structure may have a water vapor diffusion resistance coefficient of less than 5, in particular of less than 3, and/or a water vapor transmission rate (MVTR) above 10.000 g/m²/24 h, in particular above 50.000 g/m²/24 h. Such parameters provide for good water vapor breathability.

The geometric functional structure may have a water permeability and/or water resistance of a water column of over 500 mm, in particular of over 2000 mm. In case of a textile footwear upper having such geometric functional structure for its textile structure, such water resistance can provide for a dry internal environment during rain.

The geometric functional structure may have a water absorption of at most 5 wt%, in particular of at most 3 wt%. In particular, a material of the at least one thermoplastic filament and/or the second thermoplastic filament and/or the third thermoplastic filament forming at least the predefined textile structure forming the geometric functional structure, in particular of the path segments, may have a water absorption of at most 5 wt%, in particular of at most 3 wt%. The absorption of water in percentage may be understood as the following relation of the mass of the geometric functional structure in the wet and in the dry state:$\left(\frac{{m}_{wet}}{{m}_{dry}}-1\right) ⋅ 100 % .$.

The water absorption is the difference of the mass of the wet state and the mass of the dry state divided by the mass in the dry state, this result being multiplied by 100 %. Such maximum absorption provides for a relatively dry geometric functional structure. Such water absorption allows for water vapor breathability without water being absorbed in the geometric functional structure itself.

The at least one thermoplastic filament may be hydrophobic. In particular, the second thermoplastic filament and/or a third thermoplastic filament may be hydrophobic too. Preferably, the geometric functional structure may be hydrophobic. The hydrophobic characteristics provide for surfaces of the path segments that allow water to roll off. In particular, a contact angle of water droplets and the at least one thermoplastic filament respectively the geometric functional structure may be above 70°, in particular above 90°.

The at least one thermoplastic filament and/or the second thermoplastic filament and/or the third thermoplastic filament may be parts of a common continuous thermoplastic filament. The at least one thermoplastic filament and the second thermoplastic filament and/or the third thermoplastic filament may be made from different materials. Alternatively, the at least one thermoplastic filament and the second thermoplastic filament and possibly also the third thermoplastic filament may be made from the same material.

The at least one thermoplastic filament may be applied to form a minimum layer thickness of the first thermoplastic layer of at least 0.5 mm. The second thermoplastic filament may be applied in at least one specific area to form a minimum layer thickness of the second thermoplastic layer of at least 0.5 mm. The third thermoplastic filament may be applied in at least one specific area to form a minimum layer thickness of the third thermoplastic layer of at least 0.5 mm.

The path segments, in particular the loops, and/or the second path segments, in particular the second loops, and/or the third path segments, in particular the third loops, may be at least partially overlapping with each other and/or with themselves and may at least partially be located on top of each other.

The plurality of path segments may be embodied as recurring patterns, in particular of recurring loops, of the at least one thermoplastic filament in the first thermoplastic layer. The plurality of second path segments may be embodied as recurring patterns, in particular recurring second loops, of the second thermoplastic filament in the second thermoplastic layer. The plurality of third path segments may be embodied as recurring patterns, in particular recurring third loops, of the third thermoplastic filament in the third thermoplastic layer.

The plurality of path segments and at least the plurality of second path segments and possibly additionally the third path segments, in particular the third loops, may be embodied as recurring patterns, in particular recurring second loops, and possibly recurring third loops, having the same recurring pattern. The recurring pattern of the plurality of path segments and the recurring pattern of the plurality of second path segments, in particular also the third path segments, in particular the third loops, may be offset to each other in a predefined direction with a predefined relative distance to each other. The offset may include a distance in a direction perpendicular to a longitudinal axis of the application path and a distance in direction to the longitudinal axis of the application path. For example, a vector (dist_x,dist_y) may indicate such relative offset.

In case the path segments are loops, each loop may be formed by the at least one thermoplastic filament may define a maximum clear distance of 5 mm to 50 mm, of 5 mm to 40 mm, or of 5 mm to 30 mm.

The second thermoplastic filament and/or the third thermoplastic filament may be at least partly applied as a wadding in at least one specific area.

In at least one specific area sections of the second application path may be angled with respect to underlying sections of the application path.

The method may further comprise the step of applying the second thermoplastic filament onto the at least one thermoplastic filament for creating at least one specific property in at least one specific area.

The method may further comprise the step of varying at least one application path parameter during application of the at least one thermoplastic filament onto the shaping carrier for creating at least one specific property in at least one specific area.

The textile element may be envisaged for use in an apparel, may be part of an apparel, and/or may constitute the apparel. In this context an "apparel" may be understood as a personal item that may be worn and/or carried by and/or on a person, like, for example, a cap, a hat, a helmet, a harness, a glove, a garment, like a shirt or pants, a bag, a pouch, a purse, a backpack, a duffel bag, or preferably an article of footwear. Preferably, the textile element forms a textile footwear upper for an article of footwear or of an article of footwear, like, for example, a sports shoe, in particular a running shoe, a marathon shoe, a tennis shoe, a soccer shoe, a football shoe, an athletics shoe, and/or a climbing shoe, a hiking shoe, a skating shoe, a dancing shoe, a leisure shoe, a sneaker, and so on.

Depending on the apparel to be manufactured, the shaping carrier may at least partially be shaped according to the envisioned shape of the textile element. The shaping carrier may be a last, in particular a footwear last for shaping a textile footwear upper.

In the case of an article of footwear, the article of footwear may comprise a sole unit which may be joined to the textile footwear upper by any applicable method, for example, by glueing, stitching, or directly molding to a lower part and/or surface of the textile footwear upper. Furthermore, for connecting the sole unit to the textile footwear upper, the sole unit may be pre-assembled, preprinted, and/or pre-molded, then affixed to the footwear last, heated at least in part, in particular where the sole unit is supposed to contact the textile footwear upper, and finally joined to the textile footwear upper while applying the at least one thermoplastic filament onto the shaping carrier by providing the at least one thermoplastic filament not only onto the shaping carrier but also at least onto a side of the sole unit.

The textile element may be a sheet element having a thickness, in particular a maximum thickness, being at least 10 times, preferably at least 50 times and most preferably at least 100 times, smaller than its width and/or length. The maximum thickness of the textile element may be at least 0.1 mm, at least 0.2 mm, or at least 0.3 mm. The maximum thickness of the textile element may be at most 5 mm, at most 4 mm, or at most 3 mm. The textile element may have a non-uniform thickness, and may include at least one thickening, like, for example, a cushioning, a padding and/or a plating, and/or at least one thinning, like a flexible zone and/or a ventilation zone.

The textile element comprises the at least one thermoplastic filament, and may comprise, in addition, the second thermoplastic filament and in some embodiments even a third thermoplastic filament, that may be applied at least partially on top of the at least one thermoplastic filament and/or the second thermoplastic filament. The textile element may comprise even further filaments. Preferably all filaments are polymeric. In some embodiments the textile element may consist of a single, in particular uninterrupted, thermoplastic filament. In other embodiments, the textile element may consist of several separate thermoplastic filaments, that may, however, be fused to each other.

The at least one thermoplastic filament may be deposited onto the shaping carrier so that a surface area covered by the at least one thermoplastic filament corresponds to a surface area covered by the textile element. Alternatively, the at least one thermoplastic filament may be deposited onto the shaping carrier so that a surface area covered by the at least one thermoplastic filament is smaller than the surface area covered by the textile element.

The second thermoplastic filament may be deposited only in the at least one specific area or only in a plurality of such specific areas. There may be, in particular, areas of the at least one thermoplastic filament that are deliberately left uncovered by the second thermoplastic filament.

Furthermore, the at least one thermoplastic filament may be deposited only in the at least one specific area or only in a plurality of such specific areas, which are separated from each other, and the second thermoplastic filament may be applied on top of the at least one thermoplastic filament. The at least one thermoplastic filament may be applied to the shaping carrier so that some areas of the shaping carrier are deliberately left uncovered by the at least one thermoplastic filament, wherein these areas may at least partially be covered with the second thermoplastic filament. In doing so, the second thermoplastic filament may be deposited onto the shaping carrier and/or the at least one thermoplastic filament so that a surface area covered by the second thermoplastic filament corresponds to the surface area covered by the textile element. Alternatively, the second thermoplastic filament may be deposited onto the shaping carrier and/or the at least one thermoplastic filament so that a surface area covered by the second thermoplastic filament is smaller than the surface area covered by the textile element.

The at least one specific area may have a surface size of at most 80 %, at most 60 %, at most 40 %, at most 20 %, or at most 10 % of the total surface size of the textile element. The surface size of the at least one specific area may be at most 200 cm², at most 150 cm², at most 100 cm², or at most 50 cm².

The third thermoplastic filament may be at least partially applied onto the shaping carrier and/or on top of the at least one thermoplastic filament and/or on top of the second thermoplastic filament. The third thermoplastic filament may be deposited onto the shaping carrier and/or the at least one thermoplastic filament and/or the second thermoplastic filament so that a surface area covered by the third thermoplastic filament corresponds to the surface area covered by the textile element. Alternatively, the third thermoplastic filament may be deposited onto the shaping carrier and/or the at least one thermoplastic filament and/or the second thermoplastic filament so that a surface area covered by the third thermoplastic filament is smaller than the surface area covered by the textile element. The third thermoplastic filament may in particular cover the second thermoplastic filament so that the at least one thermoplastic filament and the third thermoplastic filament may form a pocket for the second thermoplastic filament. The third thermoplastic filament may be applied so as to constitute a preferably uninterrupted upper cover and/or outer cladding of the textile element.

The at least one thermoplastic filament and/or the second thermoplastic filament and/or the third thermoplastic filament may be applied in a solid state onto the shaping carrier and/or onto an underlying layer of the at least one thermoplastic filament and/or the second thermoplastic filament, and/or the third thermoplastic filament, and may be heated afterwards, for example by hot air blowing, heat irradiation, or any other applicable method, for fusing the at least one thermoplastic filament and/or the second thermoplastic filament and/or the third thermoplastic filament with each other and/or with themselves.

Alternatively, and preferably, the at least one thermoplastic filament and/or the second thermoplastic filament and/or the third thermoplastic filament may be applied in an at least partially molten and/or liquid state onto the shaping carrier and/or onto an underlying layer of the at least one thermoplastic filament and/or the second thermoplastic filament and/or the third thermoplastic filament, the at least one thermoplastic filament and/or the second thermoplastic filament and/or the third thermoplastic filament being hereby fused with each other and/or with themselves upon hardening. Before or while applying the at least one thermoplastic filament and/or the second thermoplastic filament and/or the third thermoplastic filament, the shaping carrier and/or the respective underlying filament may be heated, in particular via a heating element integrated into the shaping carrier and/or via an external heating unit, for example a hot air blower, an IR-irradiation unit, a laser, or any other applicable heating unit.

The at least one thermoplastic filament and/or the second thermoplastic filament and/or the third thermoplastic filament may be provided as strands, in particular continuous strands, preferably having a circular cross-section. During application and before fusing, the at least one thermoplastic filament and/or the second thermoplastic filament and/or the third thermoplastic filament may have a maximum thickness of 10 µm to 1000 µm, of 50 µm to 500 µm, of 50 µm to 300 µm, or of 75 µm to 250 µm. Herein, the "maximum thickness" may be the maximum cross-sectional extension of the respective thermoplastic filament. If the respective thermoplastic filament has a circular cross-section, the maximum thickness is equal to the diameter of the respective thermoplastic filament.

In some embodiments of the invention the second thermoplastic filament may at least partly be applied as a plurality of, preferably partially superimposed, second path segments, in particular second loops, along a second application path in the at least one specific area. Thus, additional material may be provided in the at least one specific area in a controlled and/or ordered manner. In particular the additional materials can be provided at relatively high density for additional effects like strengthening, plating, etc.

Furthermore, the third thermoplastic filament may at least partly be applied as a plurality of, preferably partially superimposed, third path segments, in particular third loops, along a third application path in the at least one specific area. Thus, even more material may be provided in the at least one specific area in a controlled and/or ordered manner for increased or additional effects.

The path segments, in particular the loops, and/or the second path segments, in particular the second loops, and/or the third path segments, in particular the third loops, may advantageously be at least partially overlapping with each other and/or with themselves and may at least partially be located on top of each other. The path segment and/or the second path segments and/or the third path segments may be embodied as recurring patterns, in particular recurring loops, of the at least one thermoplastic filament and/or the second thermoplastic filament and/or the third thermoplastic filament. By at least partially overlapping and fusing neighboring filament lines, the textile element may be shaped.

The textile element may be a laid textile sheet product. Herein, the path segments, in particular the loops, and/or the second path segments, in particular the second loops, and/or the third path segments, in particular the third loops, may not be inter-looped, entangled and/or chain linked with each other. The path segments, in particular the loops, and/or the second path segments, in particular the second loops, and/or the third path segments, in particular the third loops, are arranged partially on top of each other, i.e. stacked on each other, in particular along the application path and/or the second application path and/or the third application path.

The partially superimposed path segments, in particular loops, may be arranged along the application path one after another. At least some, or the majority, i.e. more than 50 %, or essentially all, of the superimposed segments, in particular loops, except the last path segment along the application path may be partially arranged underneath their next adjacently arranged segment, in particular loop. In other words, the superimposed path segments, in particular loops, may form a structure in which the path segments, in particular loops, partially overlap and in which starting from the first path segment, in particular loop, every path segment, in particular loop, except the last one is arranged partially underneath its next adjacent path segment, in particular loop. The same may be true for the second path segments, in particular second loops, and/or for the third path segments, in particular third loops, that are arranged along the second application path and/or the third application path, respectively.

Each partially superimposed path segment, in particular loop, except the last one, may be arranged along the filament path underneath their at least 2, at least 5, at least 10, or at least 15, next adjacently arranged path segments, in particular loops. Again, the same may be true for the second path segments, in particular second loops, that are arranged along the second application path and/or for the third path segments, in particular third loops, that are arranged along the third application path.

The at least one thermoplastic filament and/or the second thermoplastic filament and/or the third thermoplastic filament may be parts of a common continuous thermoplastic filament. In certain embodiments, the continuous thermoplastic filament may form at least 100, in particular at least 1000, in particular at least 5000 path segments, in particular loops, and/or second path segments, in particular second loops, and/or third path segments, in particular third loops. The entire textile element may be formed of a single thermoplastic filament.

In some embodiments, the at least one thermoplastic filament and/or the second thermoplastic filament and/or the third thermoplastic filament may have a length of at least at least 0.1 m, at least 1 m, at least 100 m, or at least 1000 m, or at least 1500 m. The at least one thermoplastic filament and/or the second thermoplastic filament and/or the third thermoplastic filament may have a filament length of at most 10000 m, at most 5000 m, or at most 2500 m.

The loops and/or the second loops and/or the third loops may have any desired shape. For example, the loops and/or the second loops and/or the third loops may be round and particularly circular or oval, such as elliptic, or they can be polygonal. Preferably they are round. Partially superimposed loops are loops which are partially arranged on top of each other and thus partially overlap. However, the loops are not completely aligned with each other but offset to each other. In other words, the loops partially overlap with each other.

The at least one thermoplastic filament and/or the second thermoplastic filament and/or the third thermoplastic filament may form a plurality of crossings along the application path and/or the second application path and/or third application path. At the crossings, the at least one thermoplastic filament and/or the second thermoplastic filament and/or the third thermoplastic filament may contact each other and/or themselves, and may form a material-bonded, in particular fused, connection, in particular devoid of any additional, i.e. external adhesive.

In some embodiments, the textile element may have a filament crossing density of at least 100 crossings per cm², at least 200 crossings per cm², at least 300 crossing per cm², at least 400 crossings per cm², at least 500 crossings per cm², at least 600 crossings per cm², or at least 700 crossings per cm². The textile element may have a filament crossing density of less than 10000 crossings per cm², less than 5000 crossings per cm², or less than 3000 crossings per cm². Herein, the number of crossings may be derived from a microscopic image of the textile element.

If the path segments are embodied as loops, the second path segments as second loops and the third path segments as third loops, each loop and/or second loop and/or third loop except the first and last ones along the respective application path, may have a crossing number of at least 10, at least 20, at least 30, at least 50, at least 100, or at least 200. Herein, the "crossing number" is the number of crossings formed at different positions when staring at any crossing of the corresponding loop and counting the number of crossings formed by this loop with other loops until one comes back to the crossing of this loop at which one has started.

A higher crossing density can provide an increased stability, in particular tearing strength, as any occurring forces are well distributed over many crossings. Furthermore, forces can be efficiently transmitted through the textile element.

At the crossings, an upper filament section of the at least one thermoplastic filament and/or the second thermoplastic filament and/or the third thermoplastic filament, which has been applied later, may at least partly be sunken into an underlying lower filament section of the at least one thermoplastic filament and/or second thermoplastic filament and/or the third thermoplastic filament, which has been applied earlier.

The textile element may have a path segment density, in particular a loop density, of 0.5 to 15 path segments, in particular loops, per cm², 0.7 to 10 path segments, in particular loops, per cm², or 0.7 to 5 path segments, in particular loops, per cm². The textile element may have a second path segment density, in particular a second loop density, of 0.5 to 15 second path segments, in particular second loops, per cm², 0.7 to 10 second path segments, in particular second loops, per cm², or 0.7 to 5 second path segments, in particular second loops, per cm². The textile element may have a third path segment density, in particular a third loop density, of 0.5 to 15 third path segments, in particular third loops, per cm², 0.7 to 10 third path segments, in particular third loops, per cm², or 0.7 to 5 third path segments, in particular third loops, per cm². As used herein, the "path segment density", respectively the "loop density", may be the number of path segments, in particular of loops, being formed by the respective thermoplastic filament per cm². Herein, the respective path segment density, in particular the respective loop density, may be derived from a microscopic image of the textile element.

In case the path segments are loops, each loop formed by the at least one thermoplastic filament may define a maximum clear distance of 5 mm to 50 mm, of 5 mm to 40 mm, or of 5 mm to 30 mm. Herein, the "maximum clear distance" may be the maximum length of a straight line extending through the center of the loop through the open area defined by the inner periphery of the at least one thermoplastic filament forming the loop. If the loop is circular, for example, the maximum clearing distance is equal to the inner diameter of the loop. The same may be true for the second path segments being second loops and/or the third path segments being third loops.

A higher maximum clear distance can provide lower weight, higher flexibility, and/or increased breathability.

The at least one thermoplastic filament and/or the second thermoplastic filament and/or the third thermoplastic filament may be provided as strands from an extruder and/or a spray head, wherein the plurality of path segments, in particular loops, and/or the plurality of second path segments, in particular second loops, and/or the plurality of third path segments, in particular third loops, may be formed by a relative movement and/or tilting of the extruder and/or spray head with respect to the shaping carrier, in particular the footwear last. The extruder and/or spray head may be fixed and the shaping carrier, in particular the footwear last, may be robotically moved in order to form the plurality of path segments, in particular loops, and/or the plurality of second path segments, in particular second loops and/or the plurality of third path segments, in particular third loops. However, the opposite arrangement and motion would also be conceivable.

The spray head may comprise a plurality of gas discharge nozzles for discharging a gas, in particular air, laterally from at least one filament discharge nozzle of the spray head for discharging the at least one thermoplastic filament and/or the second thermoplastic filament and/or the third thermoplastic filament. The gas discharge nozzles may be, advantageously evenly, arranged around the at least one filament discharge nozzle and may be angled with respect to a discharge direction of the at least one filament discharge nozzle, in particular in order to form the ejected thermoplastic filament and/or the second thermoplastic filament and/or the third thermoplastic filament into a helix with increasing diameter as the distance from the spray head increases. In this case the application path and/or the second application path and/or the third application path is scanned by a relative movement of the spray head with respect to the shaping carrier, in particular the footwear last, whereas the path segments, in particular the loops, and/or the second path segments, in particular the second loops, and/or the third path segments, in particular the third loops, may be formed by the helical discharge of the at least one thermoplastic filament and/or second thermoplastic filament and/or third thermoplastic filament from the at least one filament discharge nozzle. Herein, the spray head may be fixed and the shaping carrier, in particular the footwear last, may be robotically moved in order to drive along the application path and/or the second application path and/or the third application path. A spray head having gas discharges nozzles and a deposition method as disclosed herein are also described in WO 2022/069583 A1. Here again, the opposite arrangement and motion of spray head and shaping carrier would be conceivable, too.

In some embodiments, the molten thermoplastic filament and/or second thermoplastic filament and/or third thermoplastic filament may be ejected from the filament discharge nozzle with a velocity of at least 0.1 m/s, at least 0.5 m/s, or at least 0.7 m/s. The molten thermoplastic filament and/or second thermoplastic filament and/or third thermoplastic filament may be ejected from the filament discharge nozzle with a velocity of at most 10 m/s, at most 5 m/s, or at most 1 m/s.

The manufacturing system, which is configured to preferably automatically execute the method disclosed herein, may comprise a set of manufacturing units for manufacturing the textile element and in particular the textile footwear upper. The set of manufacturing units may comprise a control unit for controlling the execution of the method by controlling other manufacturing units of the set of manufacturing units. The control unit may, for example, comprise a processing unit and a memory unit containing computer-readable instructions that may be read and executed by the processing unit in order to implement the method.

The set of manufacturing unit may further comprise at least one or all of the following manufacturing units: the spray head, the extruder, a gas supply unit, in particular an air supply unit for supplying gas, in particular air, to the gas discharge nozzles, a polymer supply unit for supplying a polymer composition to the extruder and/or to the filament discharge nozzle, a heating unit to heat the shaping carrier and/or the textile element and/or the sole unit, and/or a robotic handler for manipulating a relative position and/or orientation of the spray head and/or the heating unit with respect to the shaping carrier.

The set of manufacturing units may further comprise at least one or all of the following manufacturing units: a print head for applying at least one print onto the textile element and/or the sole unit, a plasma unit for plasma treating the textile element and/or the sole unit, in particular prior to printing, a curing unit for curing the textile element and/or the sole unit and/or the at least one print, a further robotic handler for manipulating a relative position and/or orientation of the print head and/or the plasma unit and/or the curing unit with respect to the shaping carrier and/or the textile element, a de-shaping unit for removing the textile element from the shaping carrier, in particular a de-lasting unit for removing the textile footwear upper and the shoe sole from the footwear last, and/or a packing unit for packaging the apparel in a sales and/or transport packaging.

Furthermore, the manufacturing system may comprise an enclosure housing at least some, preferably the majority and possibly all manufacturing units of the set of manufacturing units. The enclosure may house all manufacturing units of the set of manufacturing units apart from the de-shaping unit and/or packing unit. The enclosure can provide protection during manufacturing, not only for personnel, but for the process itself.

The manufacturing system may comprise a single manufacturing station having the set of manufacturing units, or may comprise a plurality of identical manufacturing stations, each having its own set of manufacturing units and possibly each having a dedicated enclosure, which allows easy scalability of production capacities by adding or removing manufacturing stations.

Additionally, the shaping carrier or a plurality of shaping carriers, in particular different shaping carriers for different apparel sizes and/or shapes, may be part of the manufacturing system as well.

The second thermoplastic filament and possibly additionally the third thermoplastic filament may be applied onto the at least one thermoplastic filament for deliberately creating at least one specific property in at least one specific area, hereby adapting the textile element for specific applications and/or for specific wearers.

The different or specific applications, in particular regarding the article of footwear and/or the textile footwear upper, may be different sports, like, for example, running, tennis, soccer, football, climbing, or athletics, and/or different activities, like, for example, walking, skating, or dancing, and/or leisure, where different properties in different sections of the apparel and/or footwear may be needed and/or may be advantageous. The terms "different wearers" or "specific wearers", in particular regarding the article of footwear and/or the textile footwear upper, may refer to different anatomies and/or different motional behaviors, in particular gaits, of different wearers and in particular not only to different apparel and/or footwear sizes.

The application path and/or the second application path and/or the third application path may at least partially be in the shape of a helix or a spiral, and/or meandering. If a footwear last is employed, an axial direction of the helix and a height direction of the footwear last may enclose an angle smaller than 30°, in particular smaller than 20° and preferably smaller than 10°.

During application of the at least one thermoplastic filament and/or of the second thermoplastic filament and/or of the third thermoplastic filament at least one respective application path parameter may be varied. The term "application path parameter" as used herein may be understood as a parameter relating to the respective application path. The at least one application path parameter may be indicative of the relative movement of the extruder and/or spray head in relation to the shaping carrier and in particular to the footwear last.

The at least one application path parameter may comprise an application speed of applying the at least one thermoplastic filament onto the shaping carrier along the application path, and/or an application speed of applying the second thermoplastic filament onto the at least one thermoplastic filament along the second application path and/or an application speed of applying the third thermoplastic filament onto the at least one thermoplastic filament and/or the second thermoplastic filament along the third application path. This allows easy control and/or setting of a density and/or flexibility and/or breathability of the textile element in certain sections of the textile element.

The application speed may be defined by the relative speed of the extruder and/or spray head with respect to the shaping carrier, in particular the footwear last, and/or with respect to the at least one thermoplastic filament and/or the second thermoplastic filament and/or the third thermoplastic filament. A higher application speed may yield a less dense and/or more flexible and/or more breathable region of the textile element, in particular the textile footwear upper. A lower application speed may lead to a denser and/or stiffer and/or less breathable region of the textile element, in particular the textile footwear upper. A higher application speed may increase sizes of the openings formed by at least the at least one thermoplastic filament and/or the second thermoplastic filament and/or the third thermoplastic filament.

Furthermore, the at least one application path parameter may comprise a course of the application path and/or the second application path and/or the third application path. This greatly increases flexibility when manufacturing textile elements. Furthermore, this allows creating specific and/or complex shapes, in particular for providing certain attributes in the at least one specific area.

The at least one specific area my encompass a change of course of the application path and/or the second application path and/or the third application path so that an exit direction of the application path and/or the second application path and/or the third application path exiting the at least one specific area is angled with respect to an entry direction of the respective application path, entering the at least one specific area, by at least 20°, at least 40°, at least 60°, at least 80°, at least 100°, at least 120°, or at least 140°. The application path and/or the second application path and/or the third application path may change its course within the at least one specific area by at least at least 20°, at least 40°, at least 60°, at least 80°, at least 100°, at least 120°, or at least 140°. The application path and/or the second application path and/or the third application path may be partially meandering in the at least one specific area. Furthermore, the application path and/or the second application path and/or the third application path may be partially spiral shaped in the at least one specific area.

It should be understood that although the wording "applying at least one thermoplastic filament onto a/the shaping carrier", "applying a second thermoplastic filament onto at least one the thermoplastic filament" and "applying a third thermoplastic filament onto the at least one thermoplastic filament" and/or "onto the second thermoplastic filament" is used, this should not be construed as meaning that only one single layer of the at least one thermoplastic filament and/or only one single layer of the second thermoplastic filament and/or only one single layer of the third thermoplastic filament is allowed on top of the respective underlying structure. In fact, several layers of the at least one thermoplastic filament may be applied one on top of the other onto the shaping carrier. Correspondingly, several layers of the second thermoplastic filament and/or of the third thermoplastic filament may be applied one on top of the other onto the at least one thermoplastic filament and/or the second thermoplastic filament. These layers may be fully or only partly overlapping.

If the at least one thermoplastic filament is applied onto the shaping carrier with a maximum layer thickness of at most 0.5 mm, at most 0.25 mm, or at most 0.1 mm, material savings and a weight reduction can be achieved.

The second thermoplastic filament and/or the third thermoplastic filament may be applied in the at least one specific area with a minimum layer thickness of at least 0.5 mm, at least 0.75 mm, at least 1 mm, or at least 2 mm. This can ensure an adequately high effect on the at least one specific property in the at least one specific area. Furthermore, differences in mechanical and/or thermal properties in different sections of the textile element, in particular the textile footwear upper, can be increased. Thus, diversification regarding different textile elements can be enhanced.

In some embodiments of the invention sections, in particular straight sections, of the second application path may be angled with respect to underlying sections, in particular straight sections, of the application path in the at least one specific area. Furthermore, sections, in particular straight sections, of the third application path may be angled with respect to underlying sections, in particular straight sections, of the application path and/or of the second application path in the at least one specific area. In other words, application directions of the at least one thermoplastic filament and/or the second thermoplastic filament and/or the third thermoplastic filament may differ. Furthermore, application schemes, in particular in terms of applied shapes, of the at least one thermoplastic filament and/or the second thermoplastic filament and/or the third thermoplastic filament may differ. This allows advantageously adjusting and/or setting mechanical and/or thermal properties of the textile element in the at least one specific area. Furthermore, design freedom can be increased as specific aesthetic effects can be created.

When viewing the at least one specific area perpendicularly along a surface normal of the textile element, at least some and preferably the majority of sections of the second application path and at least some and preferably the majority of sections of the application path may enclose an angle larger than 0°, preferably larger than 30°, larger than 45°, or larger than 60°, and smaller than 180°. Said angle may essentially be 90°. Correspondingly, at least some and preferably the majority of sections of the third application path and at least some and preferably the majority of sections of the application path and/or of the second application path may enclose an angle larger than 0°, preferably larger than 30°, larger than 45°, or larger than 60°, and smaller than 180°. Said angle may essentially be 90°, too.

Therein, the second thermoplastic layer may be fixed to the thermoplastic layer in the at least one specific area, whereby an advantageous strengthening and/or stiffening of the textile element, in particular the textile footwear upper, can be obtained. This effect can be further increased if sections of the second application path are additionally angled with respect to underlying sections of the application path in the at least one specific area.

The second thermoplastic layer may be fixed to the thermoplastic layer in the at least one specific area by any applicable method, like, for example, glueing, stitching, fusing, etc. Advantageously, however, the second thermoplastic layer may be thermally bonded to the thermoplastic layer, preferably by applying the second thermoplastic filament onto the underlying thermoplastic filament by depositing the former in an at least partially molten and/or liquid state onto the latter, most preferably by discharging the second thermoplastic filament from the filament discharge nozzle of the spray head.

Alternatively, the second thermoplastic layer may be moveable relative to the thermoplastic layer in the at least one specific area. This may increase wear comfort and/or facilitate entry of a wearer, in particular in case of an article of footwear.

The second thermoplastic layer and the thermoplastic layer, and/or the second thermoplastic filament and the at least one thermoplastic filament may be fixed to each other outside of the at least one specific area, in particular by any applicable method like, for example, glueing, stitching, fusing, and so forth. Advantageously, the second thermoplastic layer may be thermally bonded to the thermoplastic layer outside of the at least one specific area by applying the second thermoplastic filament onto the underlying thermoplastic filament by depositing the former in an at least partially molten and/or liquid state onto the latter, most preferably by discharging the second thermoplastic filament from the filament discharge nozzle of the spray head.

The second thermoplastic layer and the thermoplastic layer, and/or the second thermoplastic filament and the at least one thermoplastic filament may be kept moveable in the at least one specific area by using an intermediate blocking layer on top of the thermoplastic layer and/or the at least one thermoplastic filament when applying the second thermoplastic layer and/or the second thermoplastic filament. The intermediate blocking layer may be removed after the second thermoplastic layer and/or the second thermoplastic filament has hardened and/or fused. By keeping the second thermoplastic layer moveable relative to the thermoplastic layer in the at least one specific area, a freestanding flap, tongue, and/or strap may be provided.

In some embodiments of the invention the second thermoplastic filament may at least partly be applied as a wadding in the at least one specific area. In this way, an improved thermal insulation can be achieved. Furthermore, wear comfort can be increased, in particular in case of an article of footwear, as an advantageous padding can be provided.

Herein, a "wadding" may be understood as a structure in which the second thermoplastic filament is in a disordered state and may take up a higher volume compared to an ordered state of the second thermoplastic filament, where the at least one thermoplastic filament may be present as the plurality of second path segments and in particular as the plurality of second loops. Such wadding may be obtained by an increased distance between the spray head and the shaping carrier during deposition of the second thermoplastic filament compared to a distance between the spray head and the shaping carrier while applying the second thermoplastic filament in the form of the plurality of second path segments, in particular of second loops, as described before. If the second thermoplastic filament is at least partly applied as a wadding, the third thermoplastic filament may cover the second thermoplastic filament so that the at least one thermoplastic filament and the third thermoplastic filament may form a protective pocket for the second thermoplastic filament and/or the wadding.

The at least one thermoplastic filament and/or the second thermoplastic filament and/or the third thermoplastic filament may include any suitable thermoplastic polymer material and/or composition, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof.

In addition, the at least one thermoplastic filament and/or the second thermoplastic filament and/or the third thermoplastic filament may contain one or more additives, like pigments, foaming agents, cross-linking agents, etc.

If the at least one thermoplastic filament and the second thermoplastic filament and/or the third thermoplastic filament are made from the same material, the method for manufacturing can advantageously be simplified. Additionally, storage requirements can be decreased as less material has to be stocked.

The term "same material" may be understood to mean exactly the same material composition or a similar material composition taking tolerances into account.

Alternatively, the at least one thermoplastic filament and/or the second thermoplastic filament and/or the third thermoplastic filament may be made from different materials. Thus, design freedom can be increased and/or more complex designs can be enabled.

In some embodiments of the invention the at least one thermoplastic filament, the second thermoplastic filament and possibly also the third thermoplastic filament may be parts of a common continuous thermoplastic filament. Hereby, a fast, reliable, transparent and/or traceable application of the at least one thermoplastic filament and the second thermoplastic filament can be ensured.

The sole unit may comprise a midsole and an outsole, and possibly an insole, too. The midsole may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The outsole may be made from any suitable material, for example natural or synthetic rubber, or from a thermoplastic polymer, like, for example, a thermoplastic polyurethane (TPU). The midsole and/or the outsole may be molded, 3D-printed, or manufactured using any other applicable method. The midsole may, in particular additionally, be foamed.

One preferred material combination may be PEBAX^{®} (Arkema) for the midsole and thermoplastic polyurethane (TPU), such as Desmopan^{®} 2790A or Desmopan^{®} 9392A (Covestro), for the at least one thermoplastic filament and possibly the second thermoplastic filament and/or the third thermoplastic filament. A synthetic rubber may be preferred for the outsole.

When manufacturing the midsole, softened PEBAX^{®} (Arkema) may be injection-molded and foamed. Alternatively, PEBAX^{®} (Arkema) may be 3D-printed and possibly then foamed to form the midsole. The midsole may afterwards be attached to the footwear last. The rubber outsole may be attached to the midsole by glueing or any other applicable method, in particular before or after attaching the midsole to the footwear last. Finally, the at least one thermoplastic filament and possibly the second thermoplastic filament and/or the third thermoplastic filament, all made from the same thermoplastic polyurethane (TPU), may be applied to the footwear last to form the textile footwear upper, as described herein. The midsole may be connected to the textile footwear upper by applying the at least one thermoplastic filament and possibly the second thermoplastic filament and/or the third thermoplastic filament also partly onto the midsole.

Alternatively, the textile footwear upper may be formed by applying the at least one thermoplastic filament and possibly the second thermoplastic filament and/or the third thermoplastic filament, being all made from the same thermoplastic polyurethane (TPU), first, whereupon softened PEBAX^{®} (Arkema) may be directly injection-molded or 3D-printed to an underside of the textile footwear upper, and may afterwards possibly be foamed, to form the midsole. Finally, the rubber outsole may be fastened to an underside of the midsole by any applicable method, for example glueing.

For increased recyclability, the at least one thermoplastic filament and possibly the second thermoplastic filament and/or the third thermoplastic filament and the sole unit, in particular the midsole, the outsole, and possibly the insole, may all be made from the same material or the same material composition, or at least from chemically similar materials or chemically similar material compositions, like, for example, thermoplastic polyurethane (TPU).

If the textile element is a textile footwear upper, the at least one specific area may comprise an outer side section, an instep section, a heel section, a toe section, and/or an ankle section. Through this, specific and/or critical sections of a wearer's foot may be advantageously addressed by providing specific properties in these sections.

The at least one specific area may form a closed patch on the at least one thermoplastic filament and/or the second thermoplastic filament and/or the third thermoplastic filament. Herein, the at least one specific area and/or patch may be in any conceivable shape, in particular depending on the intended purpose and/or wearer. The at least one specific area and/or patch may, for example, be oblong or may comprise convex and concave outer contour sections. Furthermore, the at least one specific area may be an area that completely encloses at least one region that remains uncovered by the at least one thermoplastic filament and/or the second thermoplastic filament and/or the third thermoplastic filament. In particular, the at least one specific area may enclose, for example, a foot entry portion of the textile footwear upper, in particular like a collar.

The at least one specific property may comprise a strengthening and/or stiffening. Thus, specific areas of the apparel, in particular the article of footwear, can be strengthened and/or stiffened for meeting specific demands.

The strengthening and/or stiffening in the at least one specific area may be achieved by applying the at least one thermoplastic filament and/or the second thermoplastic filament and/or the third thermoplastic filament specifically in that area, in the latter two cases in particular as the plurality of second path segments, in particular second loops, and/or third path segments, in particular third loops. The strengthening and/or stiffening may furthermore be achieved by fixing the thermoplastic layer and the second thermoplastic layer to each other in the at least one specific area. Further still, the application speed for applying the at least one thermoplastic filament and/or the second thermoplastic filament and/or the third thermoplastic filament may be lowered in the at least one specific area in order to increase deposition density and therefore strength and/or stiffness. Alternatively, or additionally, sections of the second application path may be angled with respect to sections of the first application path and/or sections of the third application path in the at least one specific area. Furthermore, the at least one thermoplastic filament and/or the second thermoplastic filament and/or the third thermoplastic filament may be applied in the at least one specific area with a higher layer thickness and/or by deliberately choosing a specific course of the respective application path in the at least one area in order to increase strength and/or stiffness. The strengthening and/or stiffening in the at least one specific area may be combined with the provision of the geometric functional structure in the at least one specific area.

If the textile element is a textile footwear upper, in particular for a tennis shoe, a soccer shoe, a football shoe, etc., the outer side section may be stiffened and/or strengthened in order to better absorb lateral forces when changing directions. Furthermore, the toe section and/or the ankle section may be strengthened and/or stiffened to protect the wearer's toes, for example for climbing shoes, and/or ankle, in particular for hiking shoes. Further still, strengthening and/or stiffening of the instep section may be contemplated.

If the textile element is part of a glove, for example, a palm section and/or a wrist section may be strengthened and/or stiffened, in particular for biking and/or fitness gloves or ski and/or snowboard gloves. If the textile element is part of a backpack, a spine section may be strengthened and/or stiffened for better force introduction. Furthermore, strengthening and/or stiffening in certain sections may also be contemplated for garments like shirts or pants. At least a section of the textile structure of the textile element as part of the glove, for example an outer thermoplastic layer of the glove, may comprise the geometric functional structure.

The at least one specific property may comprise a cushioning. Thus, specific areas of the apparel, in particular the article of footwear, can be cushioned for meeting specific demands.

The cushioning in the at least one specific area may be achieved by applying the at least one thermoplastic filament and/or the second thermoplastic filament and/or the third thermoplastic filament specifically in that area, in the latter two cases in particular as a wadding. Furthermore, the application speed for applying the at least one thermoplastic filament and/or the second thermoplastic filament and/or the third thermoplastic filament may be increased in the at least one specific area in order to decrease deposition density and therefore provide softness and/or flexibility. Furthermore, the at least one thermoplastic filament and/or the second thermoplastic filament and/or the third thermoplastic filament may be applied in the at least one specific area with a higher layer thickness and/or by deliberately choosing a specific course of the respective application path in the at least one area in order to provide cushioning. For example, a separation distance between neighboring application paths of the at least one thermoplastic filament and/or between neighboring second application paths of the second thermoplastic filament and/or between neighboring third application paths of the third thermoplastic filament may be increased in the at least one specific area. In particular, the cushioning in the at least one specific area may comprise openings that have geometric dimensions for being repellent to water and allowing for transmission of water vapor and thus is forming the geometric functional structure.

If the textile element is a textile footwear upper, in particular the heel section may be cushioned in order to increase the wearer's comfort. Regarding running and in particular marathon shoes, an instep section may alternatively or additionally be cushioned. For hiking shoes cushioning of the ankle section may be contemplated.

In case of a glove, for example, a palm section may be cushioned, in particular for biking and/or fitness gloves or ski and/or snowboard gloves. If the textile element is part of a backpack, a spine section may be cushioned for increased wearing comfort. The textile element may also be part of cycling pants, whose seat section may be cushioned.

The at least one specific property may comprise a protective plating. Through this, specific areas of the apparel, in particular of the article of footwear, may exhibit additional protection, in particular not only for the wearer but also for parts of the apparel and in particular for parts of the textile element which are located under the protective plating.

The protective plating may be achieved in the at least one specific area by applying the at least one thermoplastic filament and/or the second thermoplastic filament and/or the third thermoplastic filament specifically in that area, in the latter two cases in particular as the plurality of second path segments, in particular second loops, and/or third path segments, in particular third loops. The protective plating may be characterized by a very dense deposition of the at least one thermoplastic filament and/or the second thermoplastic filament and/or the third thermoplastic filament, in particular with relatively small and/or highly superimposed loops and/or second loops and/or third loops. This may be achieved by lowering the application speed for applying the at least one thermoplastic filament and/or the second thermoplastic filament and/or the third thermoplastic filament in the at least one specific area. Thus, the protective plating may be watertight or at least essentially watertight. The protective plating may furthermore be achieved by fixing the thermoplastic layer and the second thermoplastic layer to each other in the at least one specific area. Alternatively, or additionally, sections of the second application path may be angled with respect to sections of the first application path and/or sections of the third application path in the at least one specific area. Furthermore, the at least one thermoplastic filament and/or the second thermoplastic filament and/or the third thermoplastic filament may be applied in the at least one specific area with a higher layer thickness and/or by deliberately choosing a specific course of the respective application path in the at least one area in order to provide protective plating.

If the textile element is a textile footwear upper, in particular for a tennis shoe, a soccer shoe, a football shoe, etc., the outer side section may be plated in order to better protect this section of the textile footwear upper and/or the corresponding section of a wearer's foot. Furthermore, the toe section may be plated to protect the wearer's toes, for example for climbing shoes and/or hiking shoes and/or soccer or football shoes. Further still, protective plating of the instep section may be contemplated, in particular for soccer or football shoes.

If the textile element is part of a glove, for example, a palm section, a back of hand section and/or a wrist section may be furnished with a protective plating, in particular for winter sports. If the textile element is part of a backpack, a plating may be foreseen at its lower part in order to protect this section, possibly also against moisture or water ingress, when the backpack is standing on the ground. Furthermore, protective plating may also be contemplated for garments, for example in knee sections of a pair of trousers.

The at least one specific property may comprise a higher flexibility and/or breathability. Thus, wearing comfort and/or performance of the apparel, in particular the article of footwear, can be increased. Furthermore, in case of an article of footwear entry can be facilitated.

Flexibility and/or breathability in the at least one specific area may be increased by keeping that area free from the second thermoplastic filament and/or the third thermoplastic filament. Alternatively, the second thermoplastic filament may be applied in that area as a wadding, and in neighboring areas as the plurality of the second path segments, in particular loops, for increased flexibility. Furthermore, the application speed for applying the at least one thermoplastic filament and/or the second thermoplastic filament and/or the third thermoplastic filament may be increased in the at least one specific area in order to decrease deposition density and therefore provide increased flexibility and/or breathability. Further still, the at least one thermoplastic filament and/or the second thermoplastic filament and/or the third thermoplastic filament may be applied in the at least one specific area with a lower layer thickness and/or by deliberately choosing a specific course of the respective application path in the at least one area in order to provide increased flexibility and/or breathability. For example, a separation distance between neighboring sections of the application path and/or between neighboring second sections of the second application path and/or between neighboring third sections of the third application path may be increased in the at least one specific area. The increased separation distance between neighboring sections may result in larger geometric dimensions of the openings, thus increasing (water vapor) breathability.

If the textile element is a textile footwear upper, the instep section, the ankle section, and/or the heel section may have increased flexibility in order to increase the wearer's comfort and/or to facilitate entry of a wearer's foot. Regarding running shoes, in particular marathon shoes and/or athletics shoes, specific sections of the textile footwear upper may be provided with increased flexibility to improve performance. In addition, the provision of the geometric functional structure results in that in these predefined sections of the textile structure, for example at least an outer layer of the textile footwear upper of a running shoe, water repellence and breathability is achieved.

In case of a glove, for example, a wrist section may exhibit increased flexibility to facilitate entry of a wearer's hand. Furthermore, a finger section of a glove may be made more flexible in order to increase a wearer's motoric sensitivity. If the textile element is part of a backpack, for example, specific sections may have increased flexibility in order to allow easier loading of the backpack. The textile element may also be part of garments which may have increased flexibility in certain areas to increase wearing comfort and/or fit.

The at least one specific property may comprise an aesthetic effect. Through this, an advantageously high design flexibility can be achieved. Different design features can easily be implemented, in particular by changing the application path and/or the second application path and/or the third application path, preferably with respect to each other, too. Furthermore, diversification can be facilitated, for example, by including the second thermoplastic filament as wadding in a specific area for a first type of footwear and by applying the second thermoplastic filament as a plurality of partially superimposed second loops in a corresponding area for a second type of footwear.

The at least one specific property may comprise an entrance enhancement. Thus, entrance of a wearer, in particular of a wearer's foot into the article of footwear, can be facilitated.

The specific properties and their application in specific areas of certain pieces of apparel listed herein are to be understood as merely exemplary. The skilled person will understand that other specific properties may be contemplated at other specific areas for certain pieces of apparel.

Furthermore, it should be understood that although the claim language refers to "at least one specific property" in "at least one specific area" this does encompass that several specific properties may be present in one specific area, and also that one or more specific properties may exist in a first specific area and one or more specific properties in a second specific area.

The methods, elements and articles disclosed herein are not intended to be limited to the application and embodiment described above. In particular, they may have a number of individual elements, components and units as well as process steps deviating from a number specified herein in order to fulfill a mode of operation described herein. In addition, in the case of value ranges specified in this disclosure, values lying within the specified limits are also to be regarded as disclosed.

In particular, it is pointed out that all features, properties and methods described in relation to an element, or an article are transferable mutatis mutandis to methods and can be used in the sense of the invention and are deemed to be co-disclosed. The same applies in the opposite direction. This means that structural features mentioned in relation to methods can also be taken into account and claimed within the scope of device claims and can also be counted as part of the disclosure.

In the following, the present invention is described by way of example with reference to the accompanying figures. The drawing, the description and the claims contain numerous features in combination. The skilled person will also usefully consider the features individually and use them sensibly in combination in the context of the claims.

If there is more than one example of a particular object, only one of them may be provided with a reference sign in the figures and in the description. The description of this specimen can be transferred accordingly to the other specimens of the object. If objects are named in particular by means of numerical words, such as first, second, third object, etc., these are used to name and/or assign objects. Accordingly, for example, a first object and a third object, but no second object, can be included. However, a number and/or sequence of objects could also be derived from numerical words.

### Brief description of the drawings

Embodiments of the present disclosure will now be described by way of example only and with reference to the following accompanying drawings.
Figure 1 schematically shows an article of footwear in a three-dimensional view; the article of footwear being based on a base footwear upper.
Figure 2 contains a schematic view of a part of a manufacturing system for manufacturing the article of footwear.
Figure 3 shows a schematic flow diagram of a method for manufacturing the article of footwear.
Figure 4 depicts a three-dimensional schematic of the partly finished base footwear upper in the process of being finalized on a footwear last.
Figure 5 shows a three-dimensional schematic of the partly finished base footwear upper in the process of being finalized on the footwear last, wherein, as a variant, specific properties are being created in a specific area.
Figure 6 contains an enlarged view of the base footwear upper.
Figure 7 depicts a three-dimensional schematic of a step of diversifying the base footwear upper to create the article of footwear having specific properties in a specific area.
Figure 8 shows an enlarged view of a part of the specific area.
Figure 9 depicts a three-dimensional schematic of the base footwear upper indicating specific areas as possible targets for applying specific properties.
Figure 10 shows a schematic flowchart of a method for manufacturing a textile element according to an alternative embodiment.
Figure 11 shows an enlarged schematic view of a geometric functional structure that is formed by a plurality of loops and a plurality of second loops, wherein two sections of the application path are parallel but offset to each other perpendicular to the application paths.
Figure 12 shows an enlarged schematic view of a geometric functional structure according to an alternative embodiment that is formed by a plurality of loops, a plurality of second loops and a plurality of third loops, wherein three application paths are angled with respect to each other.
Figure 13 shows an enlarged schematic view of a geometric functional structure according to an alternative embodiment that is formed by a plurality of loops and a plurality of second loops, wherein an application path and a second application path are parallel but offset to each along the application paths.
Figure 14 shows an enlarged schematic view of a geometric functional structure according to an alternative embodiment that is formed by a plurality of loops and a plurality of second loops, wherein an application path and a second application path are perpendicular to each other.
Figure 15 shows a top view of a geometric functional structure according to an alternative embodiment that has a porous geometric structure with openings that connects an external environment with an internal environment.
Fig. 16 shows a cross-sectional view of a geometric functional structure of the textile element according to an alternative embodiment that has a textile structure with a composition of different functional layers.

### Detailed Description

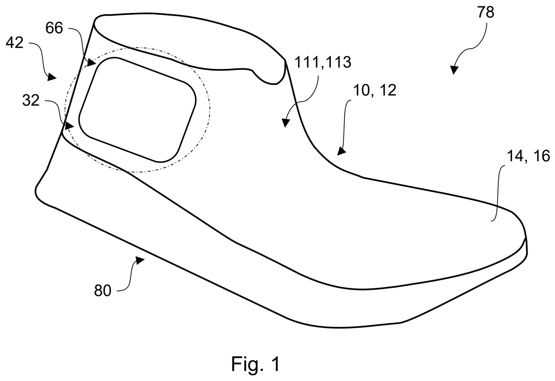

Figure 1 shows a piece of apparel, in this case an article of footwear 78 in a schematic three-dimensional view. The article of footwear 78 is a sports shoe and comprises a textile element 10 which forms a textile footwear upper 12 and a sole unit 80 which is connected to the textile footwear upper 12.

As is known in the art, the sole unit 80 may be formed by several stacked sole elements, for example a midsole, an outsole and possibly also an insole (not shown). The midsole may be made from any suitable material, in particular a thermoplastic polymer, like, for example polyester, polyamide, polyether block amide (PEBA), for example PEBAX^{®} (Arkema), thermoplastic polyurethane (TPU), ethylene vinyl acetate (EVA), polyolefin, such as polyethylene or polypropylene, or mixtures thereof. The outsole may be made from any suitable material, for example natural or synthetic rubber, or from a thermoplastic polymer, like, for example, a thermoplastic polyurethane (TPU). The midsole and/or the outsole may be molded, 3D-printed, or manufactured using any other applicable method. The midsole may, in particular additionally, be foamed.

Diversification for different applications and/or wearers may be achieved by adding a diversification structure 42 to a base footwear upper 16 of the textile footwear upper 12.

In the exemplary embodiment of figure 1, the diversification structure 42 of the article of footwear 78 is a strengthening, stiffening and protective plating applied to the base footwear upper 16 in a specific area 32, namely at a heel section 66.

In addition to the diversification structure 42, the article of footwear 78 of figure 1 comprises a textile structure 111 that forms an outer layer of the textile footwear upper 12 and forms a geometric functional structure 113. This geometric functional structure 113 will be described later. In particular, the textile structure 111 formed as the geometric functional structure 113 may be the whole textile element 10 which forms the textile footwear upper 12 with the diversification structure 42.

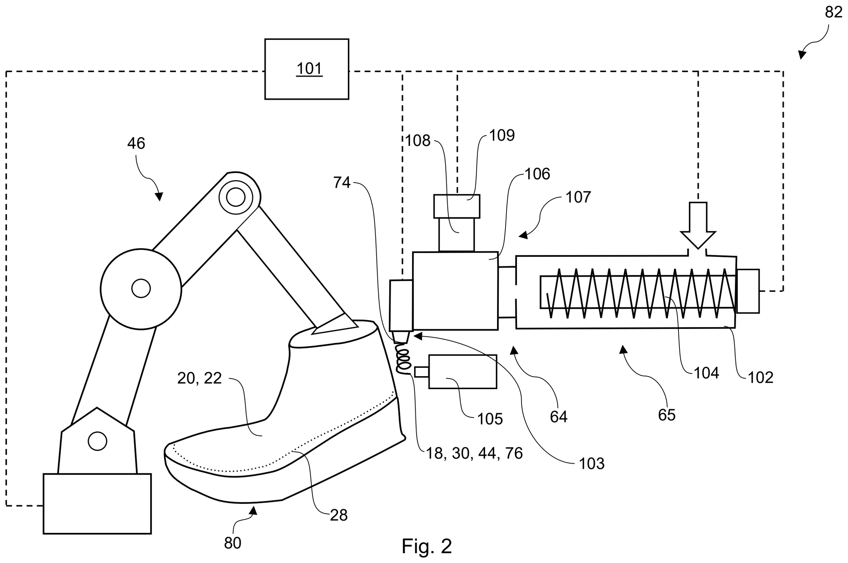

In the following figures 2 to 9, the general principles for manufacturing the textile element 10, in particular the textile footwear upper 12 will be described.

Figure 2 contains a schematic view of a part of a manufacturing system 82 for manufacturing the article of footwear 78 and in particular for manufacturing its textile footwear upper 12. The article of footwear 78 and in fact a whole variety of different articles of footwear can be manufactured by the manufacturing system 82.

The manufacturing system 82, a part of which is shown in figure 2, comprises a plurality of different shaping carriers, embodied as footwear lasts, for shaping different textile elements, embodied as textile footwear uppers, The footwear lasts are available for different footwear types and/or sizes. Among this plurality is a footwear last 22 for forming the textile footwear upper 12, and in particular the base footwear upper 16, thereon. The sole unit 80 may be affixed to an underside of the footwear last 22.

The manufacturing system 82 comprises a textile output unit 64 to apply the textile footwear upper 12, and in particular the base footwear upper 16, onto the footwear last 22. In operation, the textile output unit 64 provides thermoplastic filaments, in particular at least one thermoplastic filament 18, a second thermoplastic filament 30, and a third thermoplastic filament 44, as described later, for depositing these on the footwear last 22 and/or on already existing layers of material on the footwear last 22. The thermoplastic filament 18 and/or the second thermoplastic filament 30 and/or the third thermoplastic filament 44 may be part of a continuous thermoplastic filament 76 supplied by the textile output unit 64.

The textile output unit 64 comprises a dosing unit 107, a melting unit 65 and a filament discharge unit 103 having a filament discharge nozzle 74.

The melting unit 65 is configured to melt a polymer composition, which is then ejected via the filament discharge nozzle 74. The melting unit 65 comprises an extruder having a barrel 102 and a screw 104 which is arranged in the barrel 102. For melting the polymer composition, the melting unit 65 comprises a material heating unit (not shown).

The polymer composition may include any suitable thermoplastic polymer material and/or composition, for example polyester, polyamide, polyether block amide (PEBA), for example PEBAX^{®} (Arkema), thermoplastic polyurethane (TPU), in particular as Desmopan^{®} 2790A or Desmopan^{®} 9392A (Covestro), ethylene vinyl acetate (EVA), polyolefin, such as polyethylene or polypropylene, or mixtures thereof. In addition, the polymer composition may contain one or more additives, like pigments, foaming agents, cross-linking agents, etc.

The filament discharge nozzle 74 is configured to dispense the molten polymer composition. The dosing unit 107 comprises a pump 108, a pump drive 109 to drive the pump 108 and a dosing head 106. The pump 108 generates pressure for dispensing the molten polymer composition as the thermoplastic filaments 18, 30, 44, 76 through the filament discharge nozzle 74. The pump 108 is configured to control, in particular fine tune, the output pressure of the molten polymer composition through the filament discharge nozzle 74.

The filament discharge unit 103 comprises a plurality of gas outlet openings (not shown here), through which a flow of gas, in particular compressed air, is ejected. The flow of gas ejected by the gas outlet openings is used to influence the thermoplastic filaments 18, 30, 44, 76 emerging from the filament discharge nozzle 74 to form a helical shape. The textile output unit 64 and the method of forming the helical shaped filaments 18, 30, 44, 76 is disclosed in more detail in WO 2022/069583 A1.

The manufacturing system 82 comprises a handling unit 46 to control an application path 28 of the thermoplastic filament 18, a second application path 54 of the second thermoplastic filament 30 and a third application path 68 of the third thermoplastic filament 44 when applying the respective thermoplastic filament 18, 30, 44 onto the footwear last 22 and/or onto already existing layers of material on the footwear last 22 (in figure 2 only part of the application path 28 is depicted as an example).

The handling unit 46 is configured to generate a relative movement of the footwear last 22 relative to the filament discharge unit 103 and in particular the filament discharge nozzle 74. The handling unit 46 is connected to the footwear last 22 to create the relative movement during application of the thermoplastic filaments 18, 30, 44, 76 onto the footwear last 22 and/or onto already existing layers of material on the footwear last 22. The handling unit 46 is configured to move the footwear last 22 relative to the stationary filament discharge unit 103. The handling unit 46 may also be configured to move the footwear last 22 during the manufacturing process between different manufacturing units of the manufacturing system 82 (not shown), the textile output unit 64 being one such manufacturing unit.

The handling unit 46 is embodied as a robot, in particular with a robotic arm having six degrees of freedom. The connection between the handling unit 46 and the footwear last 22 may be detachable so that the handling unit 46 may be connected with other footwear lasts, too.

In an alternative embodiment, the handling unit 46 may be configured to move the filament discharge unit 103 relative to the stationary footwear last 22. It would also be conceivable to move both, the filament discharge unit 103 and the footwear last 22, by respective handling units 46 during processing.

The manufacturing system 82 comprises a direct heat unit 105 for heating the sole unit 80 and/or the footwear last 22 and/or the thermoplastic filaments 18, 30, 44, 76 prior and/or while applying the thermoplastic filaments 18, 30, 44, 76.

The manufacturing system 82 comprises a control unit 101 which is configured to control operation of at least the handling unit 46 and the textile output unit 64, in particular the melting unit 65, including the supply of the polymer composition, the pump drive 109, and the filament discharge unit 103.

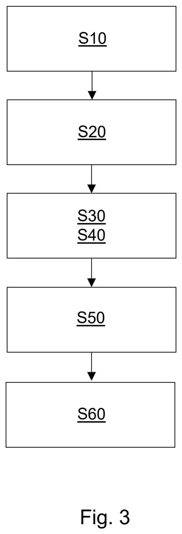

Figure 3 depicts a schematic flow diagram of a method for manufacturing different articles of footwear including the aforementioned article of footwear 78, and in particular the textile element 10, i.e. the textile footwear upper 12. The method is implemented by the manufacturing system 82, which is appropriately controlled by its control unit 101 to go through the steps of the method.

In step S10 the sole unit 80 is provided. The sole unit 80 may be available as a finished part, in particular supplied by a third party, and thus made available to the manufacturing system 82. Preferably however, the sole unit 80 is manufactured by the manufacturing system 82 in step S10 (not shown). Herein, the midsole of the sole unit 80 may be injection-molded and possibly foamed afterwards, in particular using a physical and/or chemical blowing agent. Preferably, the midsole is directly injection-molded onto the outsole of the sole unit 80, wherein the finished outsole may be provided as an inlay in a mold before injecting a polymer mixture for creating the midsole into the mold. The outsole may be injection-molded, too.

In step S20 an appropriate footwear last 22 is chosen from the plurality of available footwear lasts, the decision being in particular based on the type of footwear and/or on the footwear size to be produced. Afterwards, the chosen footwear last 22 is picked up by the handling unit 46. The sole unit 80 is fixed to the underside of the footwear last 22 by any appropriate means. Preferably, the sole unit 80 is fixed to the underside of the footwear last 22 by a switchable holding unit, for example by a magnetic holding unit or by a vacuum holding unit. In step S20 the footwear last 22 and/or the sole unit 80 may be pre-treated, in particular pre-heated, preferably by the direct heat unit 105. Afterwards the footwear last 22 together with the affixed sole unit 80 is moved to a vicinity of the filament discharge unit 103 by the handling unit 46.

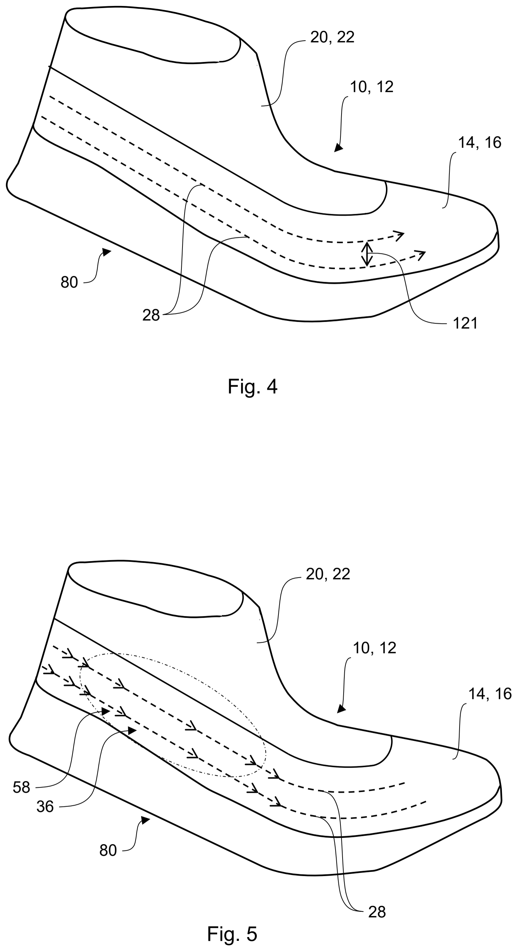

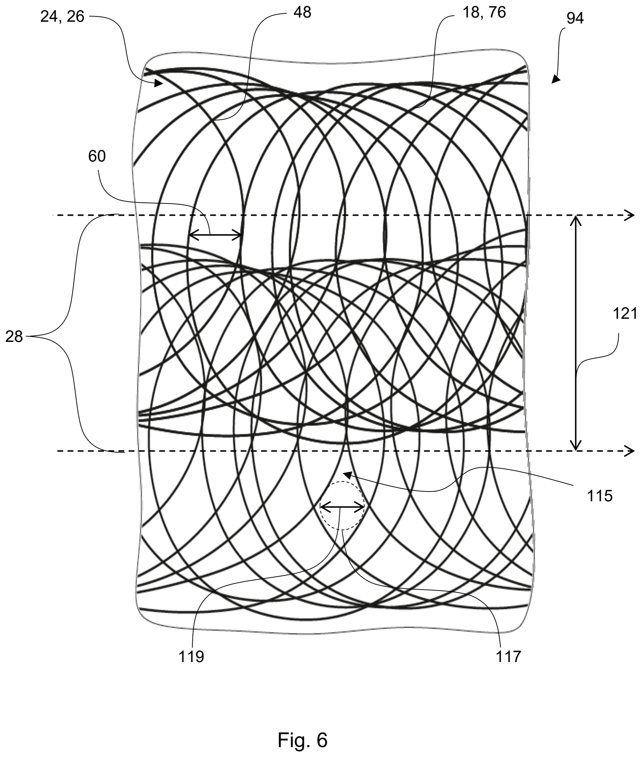

In step S30 the textile footwear upper 12, in particular the base footwear upper 16, is created by applying the thermoplastic filament 18 onto the footwear last 22 along the application path 28, thereby forming a textile structure 111 or forming at least a part of the textile element 10. This is further depicted in figures 1, 4, 5, 7 and 9, wherein for example figure 4 shows a three-dimensional schematic of the partly finished base footwear upper 16 in the process of being finalized on the footwear last 22, and figure 6 an enlarged view of a finished part of the base footwear upper 16.

The textile footwear upper 12, in particular the base footwear upper 16, is created by applying the thermoplastic filament 18 onto the footwear last 22 to form a plurality of path segments 24 in the form of loops 26 on the footwear last 22 along an application path 28 (cf. figure 6). With reference to figure 2, the application path 28 is scanned by the handling unit 46, which moves the footwear last 22 relative to the stationary filament discharge nozzle 74. Since the thermoplastic filament 18 is ejected in helical form, as described previously, the plurality of loops 26 is formed along the application path 28 as depicted in figure 6, which shows two parallel sections of the application path 28 and how they and the loops 26 overlap. Thus, the loops 26 are laid on top of each other, wherein at crossings 48 of the loops 26 the loops 26 are fused to each other, thereby creating a thermoplastic layer 94 on the footwear last 22.

With reference to figure 6, the two parallel sections of the application path 28 are explained in further detail in the following. Specifically, the loops 26 are formed in a certain recurring pattern along a first section of the application path 28 seen in an upper area in figure 6. The first section of the application path 28 has an offset 121 to a second section of the application path 28 seen in a lower area in figure 6. For instance, the offset 121 may be a predefined distance of dist_y = 5 mm in a vertical direction seen in figure 6. A pattern of the loops 26 along the first section of the application path 28 and of the loops 26 along the second section of the application path 28 is similar, but with a shift between the loops 26 relative to each other. Thereby, part of the openings 115 of the loops 26 along the first section of the application path 28 can be covered with the thermoplastic filament 18 of the loops 26 along the second section of the application path 28.

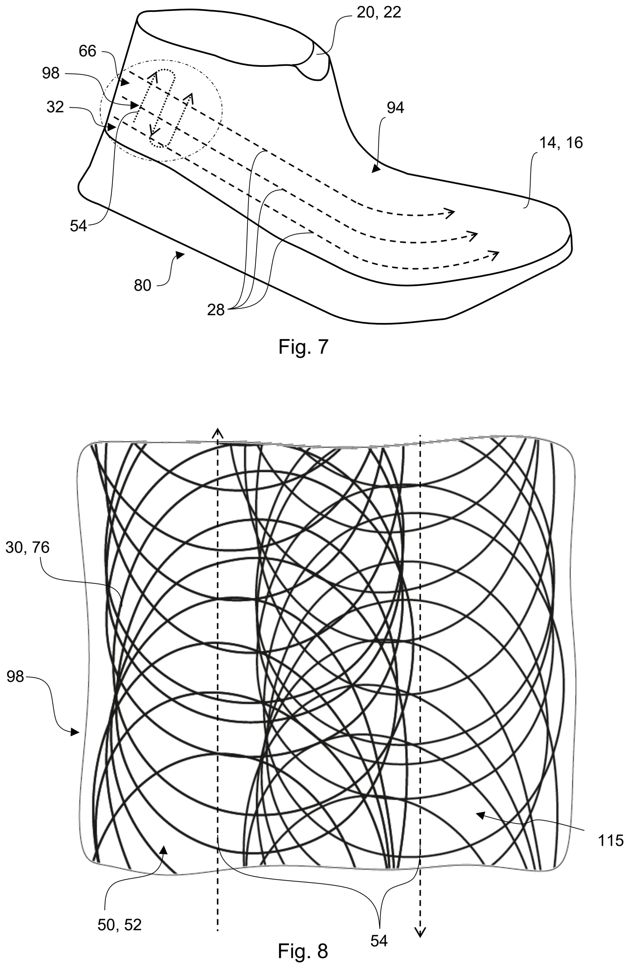

The forming of loops 26 along a further section of the application path 28 (c.f. figure 7) may be repeated, each time with an offset, for forming a large area or surface of the geometric functional structure 113.

In figure 6, for one opening 115 as an exemplary opening, a virtual circle 117 is depicted. The virtual circle 117 has such a diameter 119, that it fits exactly in the opening with a maximum possible diameter 119. The virtual circle 117 may be seen as a theoretical representation of a largest possible water droplet that fits through the opening 115. In this embodiment, the method formed such an opening 115 that the virtual circle 117 has a diameter of at most 100 µm. Such diameter 119 results in a water droplet being adhered to the thermoplastic filament 30 and being blocked or being restricted from passing through the geometric functional structure 113. The geometric functional structure 113 is thus adapted to be water repellent.

Also, the virtual circle 117 may have a minimum diameter of 10 µm. Such dimension of the opening 115 allows for water vapor molecules to pass through the opening 115. On the other hand, the minimum diameter of 10 µm limits a capillary force that would eventually force the water droplet of passing through.

In conclusion, the opening 115 provides for the two functions of the geometric functional structure 113, namely being water repellent and water vapor breathable, so blocking liquid water but allowing for transmission of water vapor molecules.

The virtual circle 117 having such minimum and maximum dimensions of a diameter 119 may be also true for a majority of 70 %, or even 90 % of all the openings 115 of the geometric functional structure 113, preferably of all the openings 115 of the geometric functional structure 113, in particular the textile structure 111. By designing the geometric functional structure 113 with a majority of all of such openings 115 having such dimensions, the geometric functional structure 113 is adapted to be water repellent and water vapor breathable. The textile structure 111 is formed as a geometric functional structure 113 has sufficient water repellence and water vapor breathability. In particular, the loops 26 that are forming the geometric functional structure 113 comprise openings 115 that have such geometric dimensions to support a repellence of water and to allow for transmission of water vapor.

With reference to figure 4, where as an example only two sections of the application path 28 are shown, the application path 28 circumvents the footwear last 22 in a multitude of sections, thereby forming the textile footwear upper 12, in particular the base footwear upper 16. Thus, the application path 28 forms a kind of helix around the footwear last 22. The two sections of the application path 28 comprise an offset 121 relative to each other in a direction perpendicular to a longitudinal axis of the application path 28.

The thermoplastic filament 18 is applied onto the footwear last 22 to form a uniform layer thickness of 0.5 mm or less. This saves material and weight.

In order to establish connection with the sole unit 80, the thermoplastic filament 18 is not only applied to the footwear last 22 but also to a side surface of the sole unit 80. The sole unit 80 is at least partly pre-heated, in particular at least in portions facing the textile footwear upper in the final product, to improve bonding of the thermoplastic filament 18 with the sole unit 80, in particular by the direct heat unit 105.

Returning to figure 3, step S40 is optional and may be omitted for some articles of footwear. Step S40 runs at least partly parallel to step S30 and comprises varying at least one application path parameter during application of the thermoplastic filament 18 onto the footwear last 22 for creating at least one specific property in at least one specific area. This is further depicted in figure 5 which shows a three-dimensional schematic of the partly finished base footwear upper 16 in the process of being finalized on the footwear last 22.

The at least one application path parameter may be an application speed of applying the thermoplastic filament 18 onto the footwear last 22 along the application path 28. This is visualized in figure 5 by the length of the arrows along the application path 28, a longer distance between the arrowheads indicating a higher speed. The course of the application path 28 in the embodiment of figure 5 is the same as the one in the embodiment of figure 4. However, the application speed is increased in the specific area 36, namely in an outer side section 58. With reference to figure 6 this leads to a higher average loop distance 60 between neighboring loops 26 in the specific area 36. In doing so, a higher flexibility and breathability may deliberately be achieved in the specific area 36 of the article of footwear 78.

Although the outer side section 58 is mentioned as the specific area 36, the skilled person will understand that any section of the base footwear upper 16 may be applicable for increasing flexibility and/or breathability as disclosed herein, depending on application and/or customer demands.

At the end of step S30 and possibly S40 the thermoplastic filament 18 is applied onto the footwear last 22 so as to form the thermoplastic layer 94. The base footwear upper 16 is connected to the sole unit 80, thereby forming a precursor article of footwear. However, this precursor article of footwear may already be a full-fledged article of footwear and may possibly be sold, too.

Returning again to figure 3, step S50 comprises diversifying the textile footwear upper 12 for different applications and/or wearers by applying a second thermoplastic filament 30 onto the base footwear upper 16 in a specific area.

Figure 7 depicts a three-dimensional schematic of step S50 for creating the textile footwear upper 12 for the article of footwear 78 of figure 1.

In step S50 the second thermoplastic filament 30 is applied as a plurality of second path segments 50, namely as a plurality of second loops 52, along a second application path 54 in the specific area 32, which is also shown in the enlarged view of figure 8. The resulting structure is quite similar to the one shown in figure 6 for the thermoplastic filament 18. Here, the specific area 32 may be a heel section 66, however any other section of the textile footwear upper 12 would also be applicable, in particular depending on demands.

The second thermoplastic filament 30 is applied as to form a second thermoplastic layer 98 above the thermoplastic layer 94, wherein the second thermoplastic layer 98 is fixed to the thermoplastic layer 94 in the specific area 32. The thermoplastic layer 94 and the second thermoplastic layer 98 are fused to each other. In order to improve the connection between the thermoplastic layer 94 and the second thermoplastic layer 98, the footwear last 22 may be heated before or during application of the second thermoplastic filament 30, for example via a heating element embedded in the footwear last 22 and/or by the direct heat unit 105.

The second thermoplastic filament 30 is applied in the specific area 32 in the form of meanders. The second thermoplastic filament 30 comprises straight sections that are connected to each other at their ends so as to form a continuous entity. In the specific area 32 the straight sections of the second application path 54 are angled with respect to underlying sections of the application path 28. Specifically, the straight sections of the thermoplastic filament 30 are essentially perpendicular to the underlying sections of the thermoplastic filament 18, however any other angle is also conceivable. Alternatively, the second thermoplastic filament 30 could also be applied in the specific area 32 in the form of a spiral or any other applicable shape.

The thermoplastic filament 18 and the second thermoplastic filament 30 are made from the same material and are parts of a common continuous thermoplastic filament 76. That is, after creating the base footwear upper 16 in step S30 and possibly S40 by depositing the thermoplastic filament 18, which is part of the continuous thermoplastic filament 76, the process directly continues with step S50 and applying the second thermoplastic filament 30, which is also part of the continuous thermoplastic filament 76, in the specific area 32.

The second thermoplastic filament 30 is applied in the specific area 32 to form a layer thickness between 0.5 mm and 2 mm, thereby strengthening, stiffening and plating the specific area 32, in this case the heel section 66. Furthermore, a distinct aesthetic effect may be achieved, in particular by a specific course of the second application path 54.

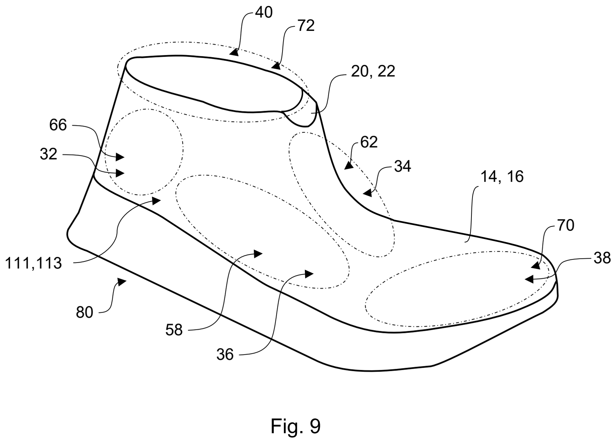

Figure 9 generally shows specific areas 32, 34, 36, 38, 40 of the base footwear upper 16 which could be targets for the application of specific properties in a three-dimensional schematic view.

The specific areas 32, 34, 36, 38, 40 may comprise the outer side section 58, the instep section 62, the heel section 66, a toe section 70, and/or an ankle section 72. Additionally, any other applicable area of the base footwear upper 16 may be envisaged as specific area, in particular depending on demands.

The specific properties may comprise one or any combination of strengthening, stiffening, protective plating, cushioning, thermal insulation, higher flexibility, higher breathability, higher water repellence, entrance enhancement, and/or aesthetic effect.

The specific properties may be achieved, as outlines above, by varying at least one application path parameter during application of the thermoplastic filament 18 onto the footwear last 22 in the specific area 32, 34, 36, 38, 40. Alternatively, or additionally, the specific properties may be achieved, as explained above, by applying the second thermoplastic filament 30 and possibly the third thermoplastic filament 44 onto the thermoplastic filament 18 and/or possibly the second thermoplastic filament 30 in the specific area 32, 34, 36, 38, 40.

In figure 9, the textile structure 111 forming the geometric functional structure 113 is provided in textile footwear upper 12, in particular the base footwear upper 16, preferably the complete textile footwear upper 12, preferably the complete base footwear upper 16, is formed as the geometric functional structure 113. As explained above with regard to figure 6, the majority or all of openings 115 that are formed by the thermoplastic filament 18 are dimensioned such that the water droplets are adhered to the loops 26 while allowing for water vapor molecules to pass through. The geometric functional structure 113 thus provides for water repellence and for water vapor breathability.

Returning to figure 3, step S60 comprises finalizing the article of footwear 78. In step S60 the article of footwear 78 may be dried and/or cured to fuse the thermoplastic filaments 18, 30, 44, for example by air blowing or in a controlled atmosphere. A print may be applied to the article of footwear 78, in particular to the textile footwear upper 12 and/or the sole unit 80. The article of footwear 78 may be plasma treated prior to applying the print. Furthermore, the article of footwear 78 may be dried and/or cured after printing. Finally, the article of footwear 78 may be removed from the footwear last 22 and packaged. All these processing steps in step S60 may be conducted by respective manufacturing units of the manufacturing system 82 (not shown). These manufacturing units may be furnished with the footwear last 22 and any article fixed thereon by the handling unit 46.

It should be noted that in variants of the method disclosed herein, one or more of the steps of the method according to figure 3 may be omitted. As already outlined, step S40 is optional. Furthermore, step S50 could be skipped, so that the article obtained in steps S10, S20 and S30 and optionally step S40 could be sold as an article of footwear. However, steps S60 could still be applied to this article.

Furthermore, the method disclosed herein could also be envisaged with different sole units for different articles of footwear. Herein, the employed sole units may have similar or the same outer dimensions and may fit on the same footwear last.

In further variants of the method of figure 3 a sole unit may not be provided in advance and may not be fastened to a footwear last. Instead, a textile footwear upper may be first created and a sole unit may be directly injected to an underside of the textile footwear upper.

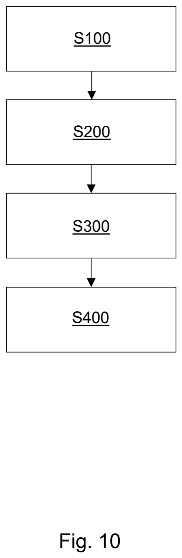

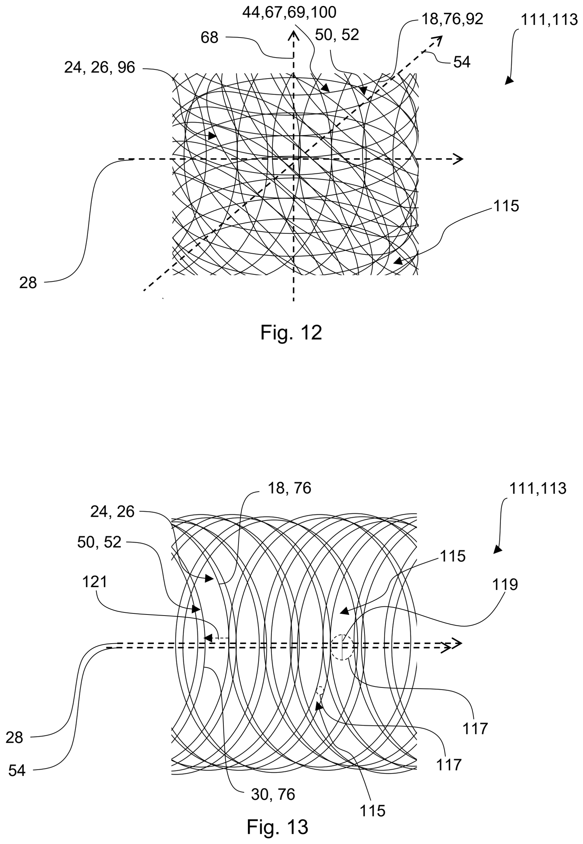

Figure 10 shows a flow chart of a method according to an alternative embodiment. In this embodiment, three thermoplastic layers are applied on top of each other, each having a different orientation of application paths and path segments relative to each other (c.f. figure 12).

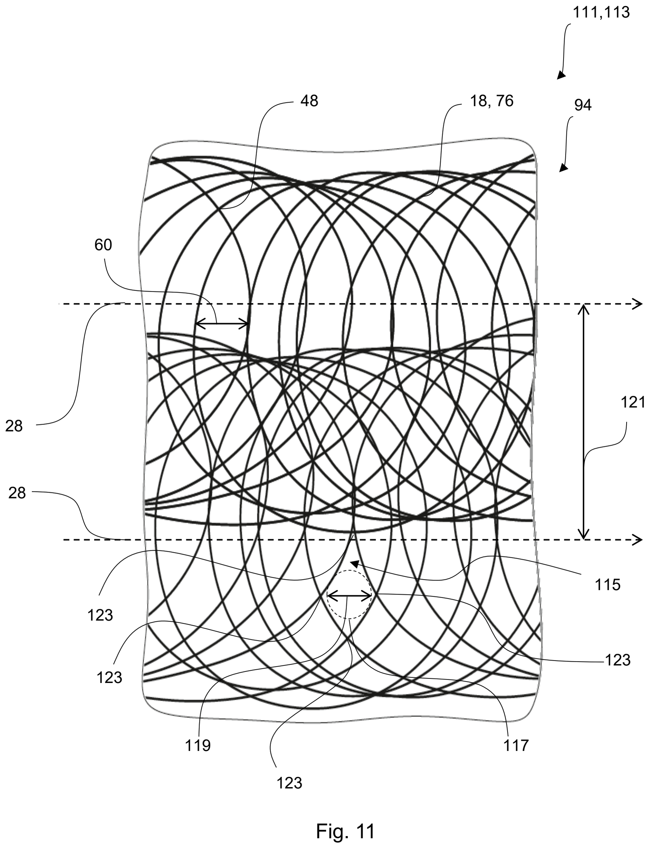

In step S100, at least one thermoplastic filament 18 is applied onto a shaping carrier 20. The step S100 is performed in the same way as the step S30 from the previous embodiment (cf. figure 3). The result is shown in figure 11 and is very similar to the one shown in figure 6 of the previous embodiment. Thus, reference is made to the description of figure 6.

In step S200, a second thermoplastic filament 30 is applied onto the first thermoplastic layer 92 to form a plurality of second path segments 50, in this embodiment second loops 52, on the first thermoplastic layer 92 along a second application path 54. Reference is made to figure 12 that shows such second loops 52 formed along the second application path 54. Thereby a second thermoplastic layer 96 is formed on top of the first thermoplastic layer 92.

Specifically, the second thermoplastic filament 30 is applied to the first thermoplastic layer 92 along the second application path 54 that is angled with respect to the application path 28 of step S100. In this embodiment, the angle between a longitudinal axis of the application path 28 and a longitudinal axis of the second application path 54 may be 45°. Figure 12 shows such second application path 54 which runs diagonally from bottom left to top right seen in figure 12. The angle supports generating a second thermoplastic layer 96 that at least partially covers some of the openings 115 of the first thermoplastic layer 92 and reduces the statistical probability that openings 115 of the first thermoplastic layer 92 and of the second thermoplastic layer 96 are on top of each other. One can say that the angled alignment of the second loops 52 supports for generating labyrinth-like connections of the openings 115 between an internal environment on one side of the textile structure 111 and an external environment on the other side. A more even distribution of the crossings 48 respectively nodes 123 of the openings 115 of the first and second thermoplastic layers 92, 96 can be achieved. The second thermoplastic layer 96 is fixed to the first thermoplastic layer 92 by applying the second thermoplastic filament 30 onto the underlying thermoplastic filament 18 by depositing the second thermoplastic filament 30 in an at least partially molten and/or liquid state onto the thermoplastic filament 18.

Returning to figure 10, in step S300, a third thermoplastic filament 44 is applied onto the second thermoplastic layer 96 to form a plurality of third path segments 67, in this embodiment third loops 69, on the second thermoplastic layer 96 along a third application path 68.

With reference to figure 12, in the enlarged view the third loops 69 that are applied along the third application path 68 are depicted. Thereby, a third thermoplastic layer 100 is formed on top of the second thermoplastic layer 96. According to step S300 this embodiment of the method, that is also shown in figure 12, the third application path 68 is angled relative to the second application path 54 with an angle of 45°(degrees). In this embodiment, the third application path 68 is angled relative to the second application path 54 with an angle of 45° and relative to the application path 28 with an angle of 90°. By doing so, a further variation of the placement of the third loops 69 onto the loops 26 and the second loops 52 is achieved and a distribution of the crossings 48. This makes a passage through the openings 115 of all three thermoplastic layers 92, 96, 100 even more branched, increasing the repellence of water droplets, for example from rain or from drizzle.

Alternatively, instead of the angle of 90° of third application path 68 relative to the application path 28, an angle of 0° may be chosen (not shown in the figures). The application path 28 and the third application path 68 may be the same, in particular may be on top of each other with no offset - or optionally with an offset in a longitudinal direction of the application path 68. Thus, in particular with no offset, the patterns of the third loops 69 are essentially congruent to the patterns of the loops 26. Such arrangement may, for instance, increase a breathability. Thus, by a specific selection and definitions of the individual parameters - such as the angle and/or the offset - the two functions of the geometric functional structure 113, namely the repellence to water droplets and the water vapor breathability, may be defined by design. In particular, a first area of the textile element 10 may be provided with a section of the textile structure 111 formed as the geometric functional structure 113 that has a higher breathability and a second area may be formed that has a lower breathability but a higher degree of water repellence. Thus, a textile element 10 may be adapted in view of the need in each area. For example, in case the textile element is a glove, a gripping surface may be provided with an increased degree of water repellence, for example to hold onto a ski pole.

Returning to figure 10, in an optional step S400, the textile structure 111 may be covered with another layer. This layer may be for example a layer for aesthetic purposes. The geometric functional structure 113 underneath the layer for aesthetic purposes still provides the person wearing it with the functions of water vapor breathability and water repellence (for example in case the layer for aesthetic purposes may be designed to become wet, for example for cooling purposes due to evaporation). Step S400 is optional and may be skipped.

The third thermoplastic filament 44 may be different to the second thermoplastic filament 30. For example, the third thermoplastic filament may have another diameter of the filament than the second thermoplastic filament 30. Thereby, when using the same or similar pattern of second loops 52 and third loops 69, openings 115 of the third thermoplastic layer 100 may be smaller than the openings 115 of the second thermoplastic layer 96. This may enhance a repellence of water of an outer layer whereas the first and second thermoplastic layers 92, 96 provide for an increased water vapor breathability with their openings 115 having a lager typical size.

The method may adapt a density of the thermoplastic filaments 18, 30, 44 and thus the size of the openings 115 by adjusting the application paths 28, 54, 68.. By increasing a density of the crossings 48 and/or reducing the sizes of the openings 115, a water repellence of the functional geometric structure 113 may be improved.

Figure 12 shows a schematic view of a of a textile structure 111 that is achieved according to another embodiment of the method. In this embodiment, the application path 28 for the loops 26, the second application path 54 for the second loops 52 and the third application path 68 for the third loops 69 are angled relative to each other. In figure 12, the application path 28 and the second application path 54 enclose an angle of 45° between each other. Further the application path 28 and the third application path 68 enclose an angle of 90° between each other. By doing so, a three layer geometric functional structure 113 is formed having the first thermoplastic layer 92, the second thermoplastic layer 96 and the third thermoplastic layer 100, wherein two neighboring thermoplastic layers 92, 96 and 96, 100 of the three thermoplastic layers 92, 96, 100 each are rotated by 45 degrees relative to each other. A layer composition is formed having a path through the openings 115 of all three thermoplastic layers 92, 96, 100 with increased branching and changing of directions.

Figure 13 shows a schematic view of a textile structure 111 formed by the method according to another embodiment. A thermoplastic filament 18 and a second thermoplastic filament 30 are applied. In this embodiment, the plurality of loops 26 and the plurality of second loops 52 have an offset 121 relative to each other in a longitudinal direction of the application path 28 respectively the second application path 50. Specifically, the application path 28 and the second application path 50 are in line (so as to say, lie on top of each other with an offset in the longitudinal direction).

Specifically, first, a thermoplastic filament 18 is applied to form a plurality of loops 26 on the shaping carrier 20 along the application path 28 as to form a first thermoplastic layer 92. Then, in a next step, a second thermoplastic filament 30 is applied onto the first thermoplastic layer 92 to form a plurality of second loops 52 on the first thermoplastic layer 92 along the second application path 54, thereby forming a second thermoplastic layer 96 on top of the first thermoplastic layer 92. The plurality of second loops 52 are applied having the same application path 28 as the loops 26, but the second application path 54 having an offset relative to each other in a longitudinal direction. This creates similar patterns of path segments 24, 50, but with a predefined offset 121 and associated shift between them.

With the definition of the offset, the superimposed pattern can be adjusted. In the embodiment of figure 13, the loops 26 of the first thermoplastic layer and the loops 50 of the second thermoplastic layer 96 do not have a symmetrical distance to each other in two opposite directions (seen from one thermoplastic filament 18 to the left to the neighboring second thermoplastic filament 30 and to the right to the neighboring second thermoplastic filament in figure 13) but an asymmetrical distance. Hereby, a combination of openings 115 having larger and smaller sizes are created. In figure 13, two (exemplary) virtual circles 117 are depicted. One virtual circle 117 is representative for the larger openings 115 and one virtual circle 117 is representative for the smaller openings 115. The larger of the two virtual circles 117 has a diameter 119 that allows for improved water vapor breathability. The smaller virtual circle 117 has a diameter 119 that prevents a water droplet from passing through the opening 115. The resulting pattern and the ratio of the larger openings 115 and the smaller openings 115 can define or at least influence a balance between the water (droplet) repellence and the water vapor breathability.

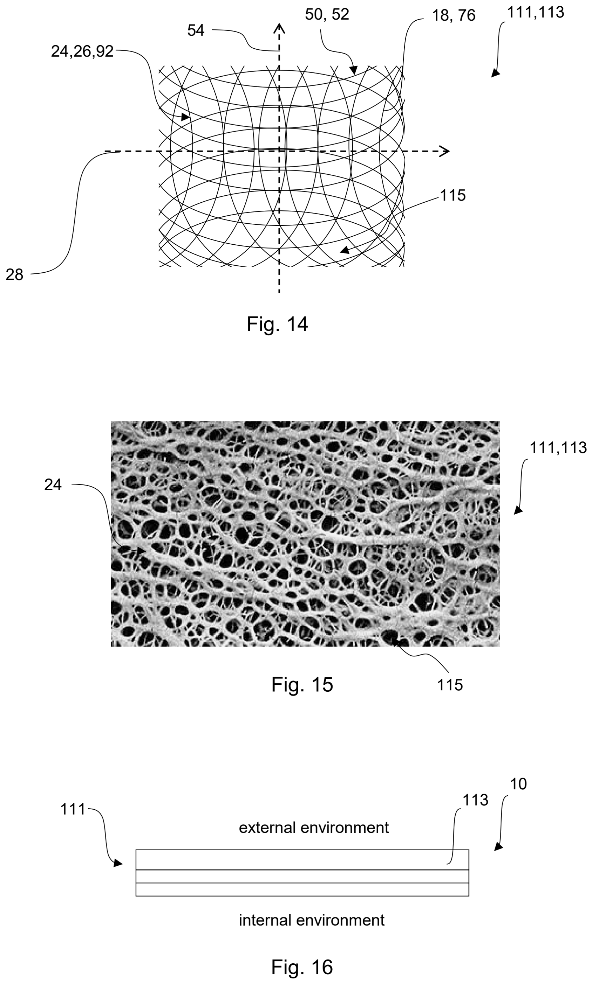

Figure 14 shows a schematic view of a textile structure 111 that is obtained in another embodiment of the method. In this embodiment, the application path 28 for the loops 26 and the second application path 54 of the second loops 52 are perpendicular to each other, enclosing an angle of 90° between each other.

Specifically, first the thermoplastic filaments 18 are applied along the application path 28, that is in figure 14 the horizontal application path 28. By doing so, the first thermoplastic layer 92 is formed. Over the first thermoplastic layer 92, the second thermoplastic filament 30 is applied in the partially molten state onto the thermoplastic filament 18 along the second application path 54 that is perpendicular to the application path 28.

With such application along the application path 28 and the second application path 54, a quite homogenous textile structure 111 may be formed. The openings 115 have sizes that have a smaller deviation than for example compared to the openings 115 of the embodiment of figure 13. A variation of diameters 119 of virtual circles 117 of the openings 115 is less pronounced. Thus, the resulting geometric functional structure 113 have similar characteristics in view of the water repellence and the air breathability over its entire structure, and thus of the entire textile structure 111.

Further decisive parameters for forming the geometric functional structure 113 may include an application speed of applying the respective thermoplastic filament 18, 30, 44 onto the shaping carrier 20 along the application path 28, 54, 68, a distance from the filament discharge nozzle 74 of a spray head to the shaping carrier 20 or a thermoplastic layer 92, 96, 100 on the shaping carrier 20.

In one embodiment, the entire textile structure 111 may be formed as the geometric functional structure 113. However, in one exemplary embodiment that is not depicted, the geometric functional structure 113 being formed by the thermoplastic filament 18 and the second thermoplastic filament 30 may be provided as a functional layer on top of another functional layer or between two other functional layers. For example, another functional layer for aesthetic purposes may be provided on top of the geometric functional structure 113, thus forming a textile structure 111 for the textile element 10. For example, in case of a running shoe, a colored layer with a logo or symbolic elements may be provided as a top layer. Also, a cushioning may be integrated as an interior layer for keeping a foot soft and gentle.

In the area of the textile element 10 that shall be protected in view of rain or other external environmental conditions, a layer or specific predefined section of the textile structure 111 is provided formed as or in the form of the geometric functional structure 113.

Preferably, a water vapor diffusion resistance coefficient of the geometric functional structure 113 can be less than 3. Also preferably, a water vapor transmission rate may be above 10.000 g/m2/24h. In view of the repellence to water, the geometric functional structure 113 may have a water resistance of a water column of over 500 mm. The geometric functional structure 113, in particular at least the thermoplastic filament 18 and the second thermoplastic filament 30 as well as the third thermoplastic filament 44 may have a water absorption of maximum 3 wt%. This avoids a soaking with water of the geometric functional structure 113 that shall provide for good water vapor breathability. Preferably, the at least one thermoplastic filament 18, in particular all thermoplastic filaments 18, 30, 44 that form the geometric functional structure 113, are hydrophobic.

Figure 15 shows a schematic top view of a geometric functional structure 113 that was formed by a method according to another embodiment. The geometric functional structure 113 is a three dimensional porous structure having a plurality of openings 115 that are connected with each other for forming a path for a fluid form an internal environmental side towards an external environmental side. The openings 115 have such dimensions that their average size are approximately 500, preferably 750, times a size of water vapor molecules. As can be seen in figure 15, the thermoplastic filaments 18 are randomly arranged. In this embodiment, a size of the path segments 24 as well as the diameter of the thermoplastic filament 18 may be varied.

Figure 16 shows a schematic longitudinal section through a textile structure 111 of a textile element 10 in the form of a running shoe according to another embodiment. In this embodiment, three functional layers are provided. The top functional layer seen in figure 16 is the geometric functional structure 113 that is facing towards an external environment and protects the person wearing the shoe against rain. The middle functional layer seen in figure 16 is a functional layer that is adapted be water vapor breathable and to transport respirational sweat towards the "outer" geometric functional structure 113. The lowest layer seen in figure 16 is facing towards a foot of the person (internal environment) wearing the running shoe and may be adapted to absorb a certain percentage of the sweat as a puffer and to transport the respirational sweat through the middle functional layer towards the outer geometric functional structure 113. For example, the lower functional layer may be formed by a thermoplastic filament that has a higher absorption rate than the at least one thermoplastic filament 18 and may have such a structure that has a great permeability.

Therefore, the textile element may be individually designed and adapted in view of the functions of the different functional layers. The geometric functional structure 113 provide for the water protection and provide for the exchange of water vapor of the textile element 10.

Various modifications to the embodiments described are possible and will occur to those skilled in the art without departing from the invention, which is defined by the following claims.

### List of reference symbols

- 10: textile element
- 12: textile footwear upper
- 16: base footwear upper
- 18: thermoplastic filament
- 20: shaping carrier
- 22: footwear last
- 24: path segment
- 26: loop
- 28: application path
- 30: second thermoplastic filament
- 32, 34, 36, 38, 40, 132, 134: specific area
- 42: diversification structure
- 44: third thermoplastic filament
- 46: handling unit
- 48: crossing
- 50: second path segment
- 52: second loop
- 54: second application path
- 56: wadding
- 58: outer side section
- 60: loop distance
- 62: instep section
- 64: textile output unit
- 65: melting unit
- 66: heel section
- 67: third path segment
- 68: third application path
- 69: third loop
- 70: toe section
- 72: ankle section
- 74: filament discharge nozzle
- 76: continuous thermoplastic filament
- 78: article of footwear
- 80: sole unit
- 82: manufacturing system
- 84: flap
- 86: tongue
- 88: collar
- 90: collar line
- 92, 94: (first) thermoplastic layer
- 96, 98: second thermoplastic layer
- 100: third thermoplastic layer
- 101: control unit
- 102: barrel
- 103: filament discharge unit
- 104: screw
- 105: direct heat unit
- 106: dosing head
- 107: dosing unit
- 108: pump
- 109: pump drive
- 111: textile structure
- 113: geometric functional structure
- 115: opening
- 117: virtual circle, virtual sphere
- 119: diameter
- 121: offset
- 123: Node
- 125: Distance
- S10, S20, S30, S40, S50, S60: step
- S100, S200, S300, S400: step

## Claims

1. A method for manufacturing a textile element (10), in particular a textile footwear upper (12), comprising:
- a step of applying at least one thermoplastic filament (18) onto a shaping carrier (20), in particular a footwear last (22), to form a plurality of path segments (24), in particular loops (26), on the shaping carrier (20) along an application path (28), thereby forming a textile structure (111),
wherein at least a predefined section of the textile structure (111) is formed as a geometric functional structure (113) that is water repellent and water vapor breathable.

2. The method according to claim 1, wherein the geometric functional structure (113) comprises openings (115) that have geometric dimensions for being repellent to water and for allowing for transmission of water vapor.

3. The method according to claim 2, wherein a virtual circle (117) or a virtual sphere (117) exactly fitting into the biggest opening among all of the openings (115) of the geometric functional structure (113) has a diameter (119) of at most 1000 µm.

4. The method according to claim 2 or 3, wherein a virtual circle (117) or a virtual sphere (117) exactly fitting into the smallest opening among all of the openings (115) of the geometric functional structure (113) has a diameter (119) of at least 10 µm.

5. The method according to any one of the preceding claims, wherein a longest distance (125) between two neighboring path segments is at most 1000 µm.

6. The method according to any one of the preceding claims, wherein the geometric functional structure (113) is formed to have:
- a water vapor diffusion resistance coefficient of less than 5, in particular of less than 3, and/or
- a water vapor transmission rate above 10.000 g/m²/24 h, in particular above 50.000 g/m²/24 h.

7. The method according to any one of the preceding claims, wherein the geometric functional structure (113) has a water resistance of a water column of over 500 mm, in particular of over 2000 mm.

8. The method according to any one of the preceding claims, wherein the geometric functional structure (113) has a water absorption of at most 5 wt%, in particular of at most 3 wt%.

9. The method according to any one of the preceding claims, wherein the at least one thermoplastic filament (18) is applied as to form a first thermoplastic layer (92),
the method further comprising:
- a step of applying a second thermoplastic filament (30) onto the first thermoplastic layer (92) to form a plurality of second path segments (50), in particular second loops (52), on the first thermoplastic layer (92) along a second application path (54), thereby forming a second thermoplastic layer (96) on top of the first thermoplastic layer (92).

10. The method according to claim 9, wherein the second thermoplastic layer (96, 98) is fixed to the first thermoplastic layer (92, 94) in at least one specific area (32, 34, 36, 38, 40, 132, 134).

11. The method according to claim 9 or 10, wherein the plurality of path segments (24) of the at least one thermoplastic layer (92) and the plurality of second path segments (50) of the second thermoplastic layer (96) are applied having the same application path (28) but with an offset (121) relative to each other in order to create similar patterns of path segments (24, 50) but with a shift between the plurality of path segments (24) of the first thermoplastic layer (92) and the plurality of second path segments (50) of the second thermoplastic layer (96).

12. The method according to any one of the claims 9 to 11, further comprising:
- a step of applying a third thermoplastic filament (44) onto the second thermoplastic layer (96) to form a plurality of third path segments (67), in particular third loops (69), on the second thermoplastic layer (96) along a third application path (68), thereby forming a third thermoplastic layer (100) on top of the second thermoplastic layer (96), the third application path (68) in particular being the same as the first application path (28) in order to have similar patterns above each other.

13. The method according to any one of the preceding claims, wherein the at least one thermoplastic filament (18) is hydrophobic.

14. An article of footwear (78), in particular a sports and/or leisure shoe, comprising:
- a textile element (10) forming a textile footwear upper (12) and being manufactured by a method according to any one of the preceding claims; and
- a sole unit (80) which is connected to the textile footwear upper (12).

15. A manufacturing system (82) for manufacturing a textile element (10), in particular a textile footwear upper (12), the manufacturing system (82) being configured to execute a method according to any one of the claims 1 to 13.
